# EUROPÄISCHE PATENTSCHRIFT

(11) **EP 1 531 675 B1**
(45) Veröffentlichungstag und Bekanntmachung des Hinweises auf die Patenterteilung: **04.04.2007**
(21) Anmeldenummer: 03794860.1
(22) Anmeldetag: 08.08.2003
(51) Int. Cl.: A01N 43/653, A01N 43/76, A01N 43/40, A01N 33/12, A01N 25/30

(54) **CARBONSÄURE-HALTIGE MITTEL UND DEREN VERWENDUNG IM PFLANZENANBAU**
AGENTS CONTAINING CARBOXYLIC ACID AND THE USE OF THE SAME IN PLANT CULTIVATION
AGENTS CONTENANT DE L'ACIDE CARBOXYLIQUE ET LEUR UTILISATION DANS LA CULTURE DE PLANTES

(30) Priorität: 19.08.2002 DE 10237885
(43) Veröffentlichungstag der Anmeldung: 25.05.2005
(73) Patentinhaber: BASF Aktiengesellschaft, 67056 Ludwigshafen (DE)
(72) Erfinder: KOBER, Reiner, 67136 Fussgönheim (DE); PARG, Adolf, 67098 Bad Dürckheim (DE); FRIES, Jürgen, 67067 Ludwigshafen (DE); ZIEGLER, Hans, 67112 Mutterstadt (DE)
(74) Vertreter: Reitstötter - Kinzebach
(86) Internationale Anmeldenummer: PCT/EP2003/008837
(87) Internationale Veröffentlichungsnummer: WO 2004/023875

(56) Entgegenhaltungen:
- EP-A- 0 095 242
- EP-A- 0 287 787
- EP-A- 0 328 466
- EP-A- 0 351 195
- EP-A- 0 453 899

## Beschreibung

Die vorliegende Erfindung betrifft carbonsäure-haltige Mittel auf Basis bioregulatorisch wirksamer Wirkstoffe aus der Klasse der Triazole sowie deren Verwendung als Bioregulator im Pflanzenanbau.

Triazole stellen eine bedeutende Wirkstoffklasse im Bereich der Pestizide dar. Als Inhibitoren der Ergosterol-Biosynthese werden sie primär als Fungizide eingesetzt (siehe beispielsweise DE 195 20 935 A1). Vereinzelt finden Triazole auch als Pflanzenwachstumsregulatoren Anwendung. Darüber hinaus werden verschiedenen der eigentlich fungizid wirkenden Triazole gelegentlich auch pflanzenwuchsregulierende Eigenschaften zugeschrieben (siehe beispielsweise EP 0 040 345 A2; EP 0 057 357 A2). So hemmen Paclobutrazol und Uniconazole die Gibberellin-Biosynthese und damit die Zellstreckung und -teilung.

Zu weiteren auf dem Gebiet der Landwirtschaft eingesetzten bioregulatorischen Wirkstoffen gehören beispielsweise quaternäre Verbindungen, deren wichtigste Vertreter N,N,N-Trimethyl-N-β-chlorethyl-ammoniumchlorid (CCC, Chlorcholinchlorid, Chlormequatchlorid, DE 12 94 734), N,N-Dimethylmorpholiniumchlorid (DMC, DE 16 42 215) und N,N-Dimethylpiperidiniumchlorid (DPC, MQC, Mepiquatchlorid, DE 22 07 575) sind. Diese Wirkstoffe, insbesondere Chlormequatchlorid und Mepiquatchlorid, werden typischerweise im Getreideanbau in vergleichsweise hohen Dosen eingesetzt. Die Aufwandmenge dieser Wirkstoffe pro Applikation beträgt in der Regel 0,3 - 1,5 kg/ha. Die Produkte sind beispielsweise als wäßrige Wirkstoffkonzentrate (z.B. Cycocel^{®} und Terpal-Marken (Gemische mit Ethephon) als SL-Mischungen, BASF) im Handel erhältlich.

Die Wirkstoffe aus der Klasse der quaternierten Ammoniumverbindungen können auch zusammen mit weiteren bioregulatorisch wirksamen Verbindungen eingesetzt werden. Beispielsweise beschreibt die EP 0 344 533 synergistische Kombinationen mit wachstumsregulierenden 3,5-Dioxo-4-propionylcyclohexancarbonsäure-Derivaten, wie Prohexadion-Calcium. Die DE 43 00 452 A1 schlägt vor, CCC mit Tebuconazol oder Triadimefon zur Hemmung des Pflanzenwachstums einzusetzen. Die Verwendung von Uniconazole zusammen mit CCC wird in der EP 287 787 A1 zur Regulation des Pflanzenwachstums beschrieben.

Neben der Optimierung der Wirkstoffeigenschaften kommt mit Blick auf eine industrielle Produktion und Anwendung dieser Wirkstoffe der Entwicklung eines effizienten Mittels besondere Bedeutung zu. Durch eine sachgerechte Formulierung des oder der Wirkstoffe muß ein optimaler Ausgleich zwischen teils gegenläufigen Eigenschaften wie der biologischen Wirksamkeit, der Toxikologie, möglichen Einflüssen auf die Umwelt und den Kosten gefunden werden. Darüber hinaus bestimmt die Formulierung zu einem erheblichen Maß die Haltbarkeit und den Anwendungskomfort eines Mittels.

Die eingangs geschilderten Wirkstoffe aus der Klasse der Triazole sind in der Regel im Wesentlichen wasserunlöslich, so dass die Formulierung entsprechender wässriger Lösungen und insbesondere wässriger Konzentrate mit besonderen Schwierigkeiten verbunden ist. Beispielsweise neigen diese Wirkstoffe beim Verdünnen mit Wasser im Tankmix zur Re-Kristallisation. Diesen Problemkreis betreffend, werden in der US 5,968,964 bestimmte Flüssigformulierungen beschrieben, die zur Solubilisierung von Triazolen ein Gemisch aus 1-Pentanol und 2-Methylpentanol verwenden. Die US 5,385,948 schlägt emulgierbare Konzentrate von im Wesentlichen wasserunlöslichen Wirkstoffen vor, die ein biologisch abbaubares Alkoxyalkyllactam als Lösungsmittel enthalten. Die Verwendung von Amiden, insbesondere N-substituierten cyklischen Alkylamiden (N-Alkylpyrrolidone) als Solventien oder Solvatisierungsmittel für Triazole wird in der EP-A-311 632 beschrieben. Der Einsatz derartiger Amide ist aus toxikologischer und ökotoxikologischer Sicht allerdings mit Nachteilen behaftet.

Vielfach ist es vorteilhaft, möglichst hochkonzentrierte Wirkstoffformulierungen herzustellen, die kurz vor der Anwendung mit der erforderlichen Menge Wasser verdünnt werden.

Insbesondere hochkonzentrierte Wirkstofflösungen sind jedoch problematisch, da den Formulierungen in der Regel unterschiedliche Zusatzstoffe zur Stabilisierung und/oder zur Wirkungssteigerung zugesetzt werden müssen. Als Folge davon kommt es häufig zu Inkompatibilitäten der einzelnen Zusatzstoffe und/oder Wirkstoffe untereinander, so dass instabile Formulierungen erhalten werden, die wegen des Auftretens von Trübungen, Ausfallens der Zusatz- oder Wirkstoffe oder geringer Lagerstabilität nachteilig sind.

Falls die Gesamtkonzentration an Zusatz- und Wirkstoffen einen bestimmten Maximalwert überschreitet, treten oft weitere nachteilige Effekte auf, beispielsweise Phasentrennungen, Sedimentationen oder stärkere Trübungen. Diese Mischungsunverträglichkeiten machen sich entweder direkt durch das Auftreten eines Zweiphasensystems bemerkbar, oder führen längerfristig zu einer geringeren Lagerstabilität der Formulierungen. Unter diesen Umständen ist es oftmals nicht mehr möglich, die gewünschten bzw. erforderlichen Zusatzstoffe in ihrer Gesamtheit der Fertigformulierung beizufügen, so dass die Zusatzstoffe dem Anwender in separaten Behältnissen zur Verfügung gestellt werden müssen. Der Anwender mischt dann die Konzentrate mit den weiteren Additiven zusammen, verdünnt sie mit Wasser und gibt sie kurz vor der Anwendung in den Tank- oder Spritzbehälter. Allerdings ist ein zusätzlicher Arbeitsschritt erforderlich. Bei unsachgemäßer und fahrlässig fehlerhafter Anwendung (z.B. Mischungsfehler, Verdünnungsfehler, etc.) ist darüber hinaus ein sicherer und optimaler Einsatz des Pflanzenschutzmittels nicht gewährleistet.

Eine alternative Möglichkeit zur Herstellung von hochkonzentrierten Lösungen besteht darin, anstelle von Wasser organische Lösungsmittel zu verwenden. Dies ist jedoch unter ökologischen Gesichtspunkten nicht wünschenswert. In WO 96/22020 und DE 44 45 546 werden beispielsweise wirkungssteigernde, nicht wasserlösliche Öle und Ester, wie z.B. Ester der Adipinsäure, Öl- oder Stearinsäure, beschrieben, die als Tank-Mix-Additive zur Herstellung von Formulierungen vom Typ O/W (Öl-in-Wasser) verwendet werden können. Diese Formulierungen haben jedoch im Fall der eingangs genannten Wirkstoffe den Nachteil, daß die Stabilisierung der Ölphase gegen eine Separierung der Öl/Wasser-Phase problematiswch ist, da geeignete Verdickungsmittel, z.B. aus der Xanthan-Reihe, in aller Regel bei Anwesenheit hoher Elektrolyt-Anteile nicht ausreichend wirken.

Aufgabe war es daher, stabile, homogene Wirkstoffformulierungen, vorteilhafterweise auf wässriger Basis, zur Verfügung zu stellen, die sich durch einen möglichst hohen Wirkstoffanteil auszeichnen und eine einfache, sichere und effiziente Anwendung durch den Anwender ermöglichen. Insbesondere war es Aufgabe, Formulierungen zu finden, die hinsichtlich der Re-Kristallisation von Triazolen wie Metconazol in der Fertigformulierung oder aber auch im Tankmix keine negativen Erscheinungsbilder und Effekte zeigen.

Es wurde gefunden, dass sich Carbonsäuren besonders gut zur Formulierung von Lösungen der an sich schwerlöslichen Triazolkomponenten, wie z. B. Metconazol und Tebuconazol, eignen.

Gegenstand der vorliegenden Erfindung sind daher Mittel, umfassend
(a) wenigstens einen Wirkstoff, ausgewählt aus (a1) der Klasse der Triazole, oder ein landwirtschaftlich nutzbares Salz davon,
(b) wenigstens eine geradkettige oder verzweigte, gesättigte oder ungesättigte aliphatische Carbonsäure,
wobei das Molverhältnis von Komponente (b) zu Komponente (a1) größer als 1 ist.

Erfindungsgemäß bevorzugt sind Mittel, in denen das Molverhältnis von Komponente (b) zu Komponente (a1) größer als 2 ist. Entsprechende Molverhältnisse von größer als 4 sind mit besonderen Vorteilen verbunden.

Erfindungegemäß geeignet sind geradkettige oder verzweigte, gesättigte oder ungesättigte aliphatische Carbonsäuren, die gegebenenfalls substituiert sind mit 1, 2 oder 3 unabhängig voneinander unter Hydoxy, Alkoxy und Halogen ausgewählten Resten. Zu den Carbonsäuren gehören einerseits relativ kurzkettige Carbonsäuren mit vorzugsweise 1 bis 6 Kohlenstoffatomen und andererseits relativ langkettige Carbonsäuren mit vorzugsweise 7 bis 26 Kohlenstoffatomen, beispielsweise die bekannten Fettsäuren.

Insbesondere geeignet sind Carbonsäure der Formel (I)

R³[-CR⁴(R⁵)]ₙ-COOH (I)

wobei R³, R⁴, R⁵ und n die folgenden Bedeutungen haben:
- R³: Wasserstoff, C₁-C₂₅-Alkyl, oder C₁-C₂₅-Alkenyl;
- R⁴: Wasserstoff, C₁-C₂₅-Alkyl, oder C₁-C₂₅-Alkenyl;
- R⁵: Wasserstoff, Hydoxy, C₁-C₆-Alkoxy oder Halogen; und
- n: 0, 1, 2 oder 3, oder
R⁴ und R⁵ zusammen genommen mit dem Kohlenstoff, an das sie gebunden sind, eine Carbonylgruppe bilden (Ketosäuren).

In obiger Formel (I) ergeben sich für n = 2 oder 3 jeweils 2 bzw. 3 Reste R⁴ und R⁵, die gleich oder verschieden sein können und unabhängig voneinander die oben angegebenen Bedeutungen annehmen können.

Bevorzugte Substituenten für R⁵ sind Hydroxy und Alkoxy.

Einem anderen Aspekt zufolge ist es vorteilhaft, wenn die Carbonsäuren in einer Menge zugesetzt werden, so dass der 1%-ig in reinem Wasser gemessene pH-Wert der Formulierung in einem Bereich von etwa 2,5 bis 5 und insbesondere 3 bis 4,5 liegt.

Insbesondere sind Ameisensäure, Essigsäure, Trimethylessigsäure, Acrylsäure, Propionsäure, 2-Methyl-propionsäure, Buttersäure, i-Buttersäure, Vinylessigsäure, n-Valeriansäure, 4-Methyl-valeriansäure, 2-Ethyl-valeriansäure, 2-Propyl-valeriansäure, Capronsäure, 2-Ethyl-hexansäure, 3-Propyl-hex-2-en-carbonsäure, Caprylsäure, n-Heptylsäure, Caprinsäure, Pelargonsäure, Laurinsäure, Myristinsäure, Palmitinsäure, Stearinsäure, Arachinsäure, Behensäure, Lignocerinsäure, Cerotinsäure, Linolsäure, Arachidonsäure, α-Linolensäure, γ-Linolensäure, Eicosapentaensäure, Docosahexaensäure, Ölsäure, Elaidinsäure, Idonsäure, Glyoxylsäure, 1-Hydroxy-propionsäure, 2-Hydroxy-propionsäure (Milchsäure), 3-Hydroxy-propionsäure, 3-Hydroxy-buttersäure, 4-Hydroxy-2-methyl-buttersäure, 2-Hydroxy-2-methyl-hex-5-en-carbonsäure, 2-Alyl-2-hydroxypent-4-en-carbonsäure, Hydroxypivalinsäure, Glucoheptonsäure, Xylonsäure, Gulonsäure, D-Gluconsäure, L-Gluconsäure, 2-Keto-L-gulonsäure, 3-Keto-L-gulonsäure, 2-Keto-L-gluconsäure, L-Mannonsäure, Mannonsäure, Gluco-heptonsäure, Ricinolsäure, D-Glucuronsäure, D-Galacturonsäure, Fluoressigsäure, Trifluoressigsäure, Chloressigsäure, Bromessigsäure, Jodessigsäure, Dichloressigsäure, Trichloressigsäure, α-Chlorpropionsäure, β-Chlorpropionsäure, 2-Chlor-buttersäure, Cyanessigsäure, Laevulinsäure, Brenztraubensäure, Abietinsäure, zu nennen.

Von den vorsthehend beschriebenen Carbonsäuren sind insbesondere diejenigen vorteilhaft, die bei 25 °C und 1 bar flüssig sind.

Die Verwendung von Carbonsäuren der Formel (I), worin
- R³: für Wasserstoff oder C₁-C₅-Alkyl steht;
- R⁴: Wasserstoff ist;
- R⁵: für Wasserstoff oder Hydroxy steht; und/oder
- n: 1 ist,
ist mit besonderen Vorteilen verbunden. Gemäß einer besonderen Ausführungsform der vorliegenden Erfindung werden Propionsäure und gemäß einer weiteren bevorzugten Ausführungsform der vorliegenden Erfindung Milchsäure verwendet. Essigsäure und auch Glyoxylsäure sowie Ölsäure sind ferner bevorzugt.

Der Anteil der Komponente (b) am Gesamtgewicht des Mittels macht in der Regel mehr als 2,5 Gew.-%, vorzugsweise mehr als 4 Gew.-% und insbesondere mehr als 5 Gew.-% aus. Andererseits macht der Anteil der Komponente (b) am Gesamtgewicht des Mittels in der Regel weniger als 70 Gew.-%, vorzugsweise weniger als 50 Gew.-% und insbesondere weniger als 40 Gew.-% aus.

Von den Wirkstoffen aus der Klasse der Triazole sind insbesondere solche mit geeigneter bioregulatorischer Wirksamkeit zu nennen, nämlich (a11) Metconazol, (a12) Epoxiconazol, (a13) Tebuconazol, (a14) Triadimenol, (a15) Triadimefon, (a16) Cyproconazol (a17) Uniconazole, (a18) Paclobutrazol und (a19) Ipconazol. Vor allem in Bezug auf die erfindungsgemäße Verbesserung des Wurzelwachstums werden (a11) und/oder (a13) bevorzugt verwendet.

Erfindungsgemäß bevorzugt ist die Verwendung von (a11) Metconazol der Formel (II) 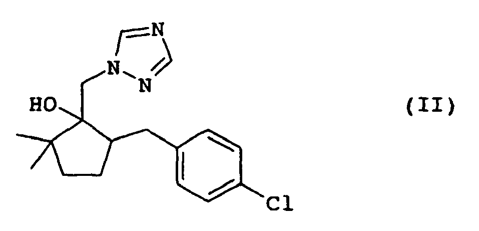 oder eines landwirtschaftlich nutzbaren Salzes davon.

Die hier gewählte Darstellung von Metconazol der Formel (II) schließt isomere Formen dieser Verbindung mit ein. Insbesondere zu nennen sind Stereoisomere, wie Enantiomere oder Diastereoisomere der Formeln (II¹⁻⁴). Neben den im wesentlichen reinen Isomeren gehören zu den Verbindungen der Formeln (II) auch deren Isomerengemsche, z.B. Stereoisomerengemische. Bevorzugt sind hohe Anteile an cis-Isomeren, vorteilhafterweise mit einem cis:trans-Verhältnis von 5:1 bis 20:1.

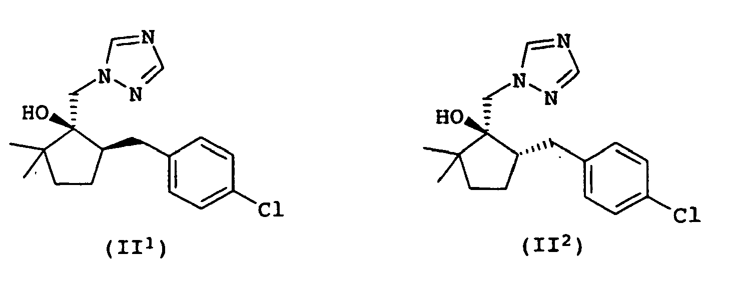

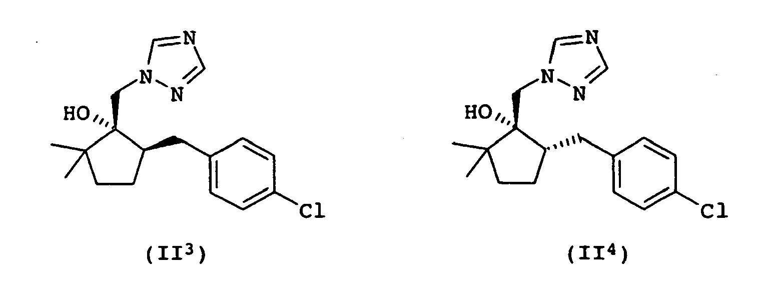

Die landwirtschaftlich nutzbaren Salze von Metconazol sind im vorliegenden Fall bevorzugt Säureadditionssalze.

Anionen von brauchbaren Säureadditionssalzen sind in erster Linie Chlorid, Bromid, Fluorid, Hydrogensulfat, Sulfat, Dihydrogenphosphat, Hydrogenphosphat, Phosphat, Nitrat, Hexafluorsilikat, Hexafluorphosphat.

Gemäß einer Ausführungsform der vorliegenden Erfindung besteht die Wirkstoffkomponente (a) im wesentlichen aus (a1), d.h. einem Wirkstoff aus der Klasse der Triazole. Gemäß einer weiteren Ausführungsform besteht die Wirkstoffkomponente (a) im wesentlichen aus einer Verbindung, die ausgewählt ist unter (a11) bis (a19), oder einem Gemisch von zwei oder mehreren dieser Verbindungen.

Der Anteil der Komponente (a1) am Gesamtgewicht des Mittels macht in der Regel mehr als 1 Gew.-%, vorzugsweise mehr als 2 Gew.-% und insbesondere mehr als 2,5 Gew.-% aus. Andererseits macht der Anteil der Komponente (a1) am Gesamtgewicht des Mittels in der Regel weniger als 50 Gew.-%, vorzugsweise weniger als 40 Gew.-% und insbesondere weniger als 35 Gew.-% aus.

Die erfindungsgemäße Kombination aus Triazol und Carbonsäure hat den Vorteil, sehr gut mit wässrigen und insbesondere elektrolythaltigen Formuliersystemen kombinierbar zu sein. Dies erlaubt die Co-Formulierung mit Wasser oder wässrigen Hilfsmitteln. Ferner ergeben sich Vorteile aus der Bereitstellung gut transportabler, lagerstabiler Flüssig-Vorkonzentrate von Triazol-Wirkstof - fen.

Neben der Komponente (a1) kann die Wirkstoffkomponente (a) erfindungsgemäßer Mittel wenigstens einen weiteren Pflanzenwirkstoff aufweisen.

Insbesondere kann die erfindungsgemäße Kombination aus Triazol und Carbonsäure unter wirkungsrelevanten und formuliertechnischen Aspekten in vorteilhafterweise mit quaternären Ammoniumsalzen kombiniert werden. In Kombination mit ausgewählten Hilfsmitteln werden stabile einphasige Formulierungen erhalten.

Gemäß einer bevorzugten Ausführungsform umfassen erfindungsgemäße Mittel daher auch
(a2) wenigstens einen Wirkstoff der Formel (III) 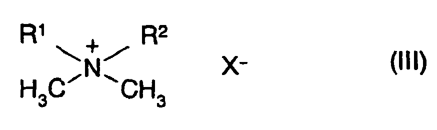 wobei R¹, R² und X die folgenden Bedeutungen haben:
   - R¹: C₁-C₄-Alkyl;
   - R²: C₁-C₄-Alkyl, Cyclopentenyl, Halogen-C₁-C₆-Alkyl; oder worin R¹ und R² zusammen einen Rest -(CH₂)₅-, -(CH₂)₂-O-(CH₂)₂- oder -(CH₂)-CH=CH-(CH₂)-NH- darstellen;
   - X: eine anionische Gruppe.

Besondere Wirkstoffe der Formel (III) ergeben sich, wenn Alkyl für Methyl, Ethyl, Isopropyl steht. Als Halogenalkylgruppe ist die 2-Chlorethylgruppe bevorzugt. Bilden die Substituenten zusammen mit dem Stickstoffatom, an das sie gebunden sind, einen cyclischen Rest, so sind R¹ und R² bevorzugt eine Morpholino- oder Piperidinogruppe. X- bedeutet beispielsweise ein Halogenid, wie Bromid und bevorzugt Chlorid; Sulfat; ein Alkylsulfat, wie Methylsulfat; ein Alkylsulfonat, wie Methylsulfonat; ein Borat, wie Pentaborat; oder eine andere in der Landwirtschaft nutzbare anionische Gruppe. Grundsätzlich kommen auch zweiwertige anionische Gruppen in Frage, die in den entsprechenden stöchiometrischen Mengen zum Ammoniumkation eingesetzt werden.

In besonderen Boraten steht X- für ein Anion der Formel (IV)

1/m · [MₓB_{y}O_{z}(A)ᵥ]^{m-} · w (H₂O) (IV)

worin
- M: für ein Kation eines landwirtschaftlich nutzbaren Metalls, Wasserstoff oder Ammonium steht;
- B: Bor ist;
- O: Sauerstoff ist;
- A: eine chelat- oder komplexbildende Gruppe ist, die mit wenigstens einem Boratom oder einem landwirtschaftlich nutzbaren Kation assoziiert ist;
- x: einer Zahl von 0 bis 10 entspricht;
- y: einer Zahl von 1 bis 48 entspricht;
- v: einer Zahl von 0 bis 24 entspricht;
- z: einer Zahl von 0 bis 48 entspricht;
- m: einer ganzen Zahl von 1 bis 6 entspricht;
- w: einer Zahl von 0 bis 24 entspricht.

Bevorzugt sind Borate der Formel (IV), worin
- x: Null ist; oder
- M: Natrium, Kalium, Magnesium, Calcium, Zink, Mangan, Kupfer, Wasserstoff oder Ammonium ist; und/oder
- y: einer Zahl von 2 bis 20, 2 bis 10 oder 3 bis 10 entspricht; und/oder
- m: 1 oder 2 ist; und/oder
- w: einer Zahl von 0 bis 24 entspricht.

Besonders bevorzugt sind Borate der Formel (IV), worin
- y: einer Zahl von 3 bis 7, insbesondere 3 bis 5, entspricht;
- z: einer Zahl von 6 bis 10, insbesondere 6 bis 8, entspricht;
- v: Null ist;
- w: einer Zahl von 2 bis 10, insbesondere 2 bis 8, entspricht.

Ganz besonders bevorzugt sind Borate der Formel (IV), worin y = 5; z = 8; v = 0; m = 1; w = 2 bis 3 ist (Pentaborate).

Gegebenenfalls können die Borate nach Zugabe der Carbonsäurekomponente (b) zumindest zum Teil in freie Borsäure überführt werden, wobei gleichzeitig aus den Boraten der Formel (III) die entsprechenden Carboxylate entstehen. In diesem Fall kann es sinnvoll sein, entsprechend höhere molare Mengen Carbonsäuren einzusetzen, insbesondere eine dem quaternären Ammoniumion der Borate der Formel (III) entsprechende molare Menge.

Soweit vorhanden, sind chelat- und komplexbildende Gruppen A vorzugsweise ausgewählt unter Hydroxycarbonsäuren, Carbonsäuren, Alkoholen, Glykolen, Aminoalkoholen, Zuckern, und ähnlichen Verbindungen.

Die Borate können ferner Waseranteile aufweisen, z.B. als Kristallwasser in freier oder koordinierter Form oder als gebundenes Wasser in Form von Bor-gebundenen Hydroxygruppen.

Weitere Ausgestaltungen und auch die an sich bekannte Herstellung erfindungsgemäßer Borate sind in der PCT/EP98/05149 beschrieben.

Vorzugsweise ist der Wirkstoff der Formel (III) ausgewählt unter
(a21) N,N,N-Trimethyl-N-β-chlorethyl-ammoniumsalzen der Formel (IIIa), 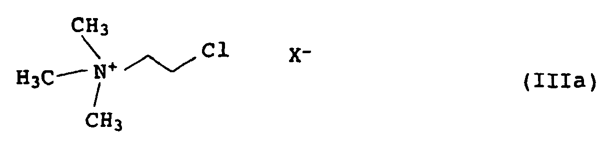
(a22) N,N-Dimethylpiperidiniumsalzen der Formel (IIIb) 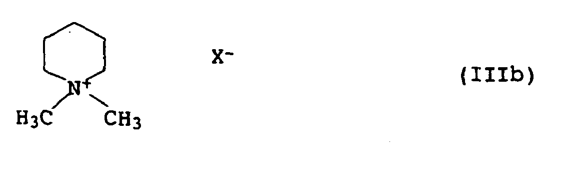 und
(a23) N,N-Dimethylmorpholiniumsalzen der Formel (IIIc) 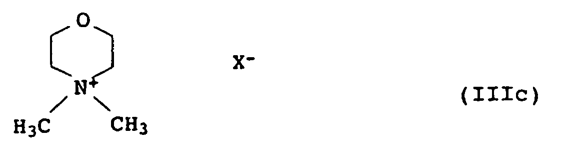
worin X⁻ insbesondere für Cl- oder 1/m · [MₓB_{y}O_{z}(A)ᵥ]^{m-} · w (H₂O) mit den vorstehend genannten Bedeutungen steht.

Besonders bevorzugt sind die Wirkstoffkomponenten (a21) und/oder (a22), insbesondere N,N,N-Trimethyl-N-β-chlorethyl-ammoniumchlorid (CCC) oder das entsprechende Pentaborat bzw. N,N-Dimethylpiperidiniumchlorid (MQC) oder das entsprechende Pentaborat.

Gemäß einer Ausführungsform der vorliegenden Erfindung besteht die Wirkstoffkomponente (a2) im wesentlichen aus einer Verbindung der Formel (IIIa) oder (IIIb) oder einem Gemisch der beiden Verbindungen.

Die relativen Wirkstoffanteile in Kombinationspräparaten sind weitgehend variabel. Einem Aspekt zufolge werden verhältnismäßig größere Gewichtsanteile an Wirkstoffkomponente (a2) als an Wirkstoffkomponente (a1) eingesetzt. Typischerweise liegt dieses Gewichtsverhältnis von (a2) zu (a1) in einem Bereich von 5:1 bis 30:1, vorzugsweise von 7:1 bis 25:1 und insbesondere von 10:1 bis 20:1. Dies gilt insbesondere für die Verwendung von Metconazol.

Kombinationen der Wirkstoffkomponenten (a1) und (a2), insbesondere der Wirkstoffe Metconazol mit MQC und/oder CCC erreichen überraschenderweise eine gemäß der Colbi-Formel überadditive bioregulatorische Wirkung.

Neben den Wirkstoffkomponenten (a1) und (a2) können die erfindungsgemäßen Mittel weitere Wirkstoffe als Wirkstoffkomponente (a3) aufweisen. Bei diesen Wirkstoffen kann es sich insbesondere um solche handeln, deren Wirkung der durch die Wirkstoffe der Komponenten (a1) und/oder (a2) vermittelten Wirkung ähnlich ist oder diese ergänzt. So kann es von Vorteil sein, zusätzlich zur Kombination aus (a1) und (a2), weitere Bioregulatoren, insbesondere Ethephon, Prohexadion-Calcium oder Trinexapac-ethyl, aber auch Herbizide, insbesondere Imazaquin, und Fungizide anzuwenden. Auch Vitamine, Cofaktoren, Spurenelemente, insbesondere B, Cu, Co, Fe, Mn, Mo und Zn, Mineralstoffe, Aminosäuren und andere esssentielle Nährstoffe können zweckmäßig sein. Bevorzugt kommt als weiterer Wirkstoff Etephon (2-Chlorethyl-phosphonsäure) in Frage. Der Anteil dieses Wirkstoffes beträgt -soweit vorhanden - in der Regel 5 bis 40 Gew.-%. Ein weiterer vorteilhaft kombinierbarer Wirkstoff ist Trinexapac-ethyl.

Gemäß einer besonderen Ausführungsform der vorliegenden Erfindung umfassen die Mittel sowohl die Wirkstoffkomponenten (a1) und (a2) als auch die Wirkstoffkomponente (a3), insbesondere Metconazol der Formel (II) und Chlormequat-chlorid und/oder Mepiquatchlorid, bzw. -Borate der Formeln (IIIa) bzw. (IIIb) zusammen mit Ethephon.

Die erfindungsgemäßen Mittel sind in der Regel fluid, insbesondere flüssig. Vorzugsweise basieren sie auf einer homogenen Phase. Homogen bedeutet erfindungsgemäß vor allem eine gleichmä-ßige Verteilung des Wirkstoffgehaltes in der Phase. In diesem Sinne ist die erfindungsgemäß erstrebenswerte Eigenschaft der Homogenität erreicht, wenn bei der praktischen Anwendung eines Mittels Fehlanwendungen aufgrund von Inhomogenitäten nicht zu erwarten sind. So kann in bestimmten Fällen die homogene Phase auch mehrere Phasen umfassen, sofern diese hinreichend fein ineinander verteilt sind. Hier sind inbesondere mikrophasige Gemische zu nennen. Vorzugsweise ist das Erscheinungsbild der homogenen Phase klar oder transparent, es kann aber auch opaque, schwach trüb, leicht trüb oder trüb sein. Trübungen können sich beispielsweise durch mikropartikuläre Hilfsstoffe, z.B. Silikone oder mineralische Bestandteile, ergeben. Auch die Viskositäten der Phase können in einem weiten Bereich variieren. Vorzugsweise sind erfindungsgemäße homogene Phasen niedrigviskos, viskos oder hochviskos. Insbesondere von Vorteil ist es, wenn die homogene Phase fließfähig ist. Diesem Aspekt zufolge bewegen sich die nach OECD Guideline 114 mit einem Viscolab LC 10-Gerät der Firma Physica oder mit einem Rheomat 115 bestimmbaren Scheinbaren Viskositäten in einem Bereich von etwa 5 mPas bis 2000 mPas, vorzugsweise etwa 10 mPas bis 500 mPas und insbesondere etwa 20 mPas bis 300 mPas.

Die homogene Phase umfasst wenigstens 2 Komponenten (a1) und (b). Ein derartiges 2-Komponentensystem ist erfindungsgemäß vorzugsweise 1-phasig. Gemäß einer besonderen Ausführungsform der vorliegenden Erfindung gilt dies auch für eine die Komponenten (a1), (a2) und (b) umfassende homogene Phase.

Erfindungsgemäße Mittel fallen daher in den Bereich der Flüssigformulierungen. Hierzu gehören insbesondere wasserlösliche Konzentrate (SL-Formulierungen), Suspensionskonzentrate (SC-Formulierungen), Suspoemulsionen (SE-Formulierungen) und Mikroemulsionen.

Gemäß einer besonderen Ausführungsform werden wasserlösliche Konzentrate (SL-Formulierungen) bereitgestellt. Diese basieren auf einer erfindungsgemäßen homogenen Phase, die als fluide bzw. flüssige Phase mögliche weitere Komponenten in gelöster Form enthält.

Die erfindungsgemäßen Mittel weisen eine ausgezeichnete Stabilität auf, die vor allem einen guten Anwendungskomfort bietet. So sollten die erfindungsgemäßen Mittel zumindest über die Anwendungsdauer von in der Regel wenigen Stunden unter den Anwendungsbedingungen einen bestimmten Zustand im wesentlichen beibehalten. Insbesondere ist es von Vorteil, wenn die die Komponente (a) umfassende Phase der Mittel wenigstens für eine Dauer von 5, vorzugsweise 8 und insbesondere 12 Stunden homogen ist. Unter dem Aspekt der Stabilität sind insbesondere diejenigen Mittel bevorzugt, bei denen im Verlauf einer 2-wöchigen Lagerung bei 54°C (CIBAC 1-MT46.1.3), einer 1-wöchigen Lagerung bei 0°C (CIPAC 1-MT39), und/oder einer 2-monatigen Lagerung bei 45°C keine nennenswerte Phasentrennung der homogenen Phase beobachtet wird, oder bei denen unter Umständen, z.B. bei höherer Temperatur wie den Testtemperaturen, Phasentrennungen auftreten, die sich aber durch Abkühlen und erforderlichenfalls zweckmäßiges Bewegen der Mittel wieder homogenisieren lassen (reversible Phasentrennung). Diesem Aspekt zufolge sind von den homogenen Phasen mit opaquem, schwach trübem, leicht trübem oder trübem Erscheinungsbild diejenigen bevorzugt, die besagte Stabilitäten aufweisen.

Die vorliegende Erfindung betrifft gemäß einer Ausführungsform Mittel mit hohen Wirkstoffanteilen (Konzentrate). In diesem Fall macht der Anteil der Komponente (a) am Gesamtgewicht des Mittels in der Regel mehr als 100 g/l, vorzugsweise mehr als 200 g/l und insbesondere mehr als 250 g/l aus. Andererseits liegt der Anteil der Komponente (a) am Gesamtgewicht des Mittels zweckmäßigerweise in der Regel bei weniger als 700 g/l, vorzugsweise bei weniger als 650 g/l und insbesondere bei weniger als 600 g/l. Bereiche von 200 bis 600 g/l sind daher bevorzugt. Hierbei macht der Triazol-Anteil üblicherweise bis zu 300 g/l aus. Der Anteil Metconazol beispielsweise beträgt üblicherweise mindestens 10 g/l, vorzugsweise 20-50 g/l.

Gemäß einer besonderen Ausführungsform der vorliegenden Erfindung umfassen die Mittel als Komponente (c) wenigstens ein oberflächenaktives Hilfsmittel. Der Begriff "oberflächenaktives Hilfsmittel" bezeichnet hier grenzflächenaktive bzw. oberflächenaktive Mittel, wie Tenside, Dispergiermittel, Emulgiermittel oder Netzmittel.

Prinzipiell brauchbar sind anionische, kationische, amphotere und nichtionische Tenside, wobei Polymer-Tenside sowie Tenside mit Heteroatomen in der hydrophoben Gruppe eingeschlossen sind.

Zu den anionischen Tensiden gehören beispielsweise Carboxylate, insbesondere Alkali-, Erdalkali- und Ammoniumsalze von Fettsäuren, z.B. Kaliumstearat, die üblicherweise auch als Seifen bezeichnet werden; Acylglutamate; Sarkosinate, z.B. Natriumlauroylsarkosinat; Taurate; Methylcellulosen; Alkylphosphate, insbesondere Mono- und Diphosphorsäurealkylester; Sulfate, insbesondere die erfindungsgemäß als Komponente (c2) beschriebenen; Sulfonate, insbesondere die erfindungsgemäß als Komponente (c2) beschriebenen; weitere Alkyl- und Alkylarylsulfonate, insbesondere Alkali-, Erdalkali- und Ammoniumsalze von Arylsulfonsäuren sowie alkylsubstituierten Arylsulfonsäuren, Alkylbenzolsulfonsäuren, wie beispielsweise Lignin- und Phenolsulfonsäure, Naphthalin- und Dibutylnaphthalinsulfonsäuren, oder Dodecylbenzolsulfonate, Alkylnaphthalinsulfonate, Alkylmethylestersulfonate, Kondensationsprodukte von sulfoniertem Naphthalin und Derivaten davon mit Formaldehyd, Kondensationsprodukte von Naphthalinsulfonsäuren, Phenol- und/oder Phenolsulfonsäuren mit Formaldehyd oder mit Formaldehyl und Harnstoff, Mono- oder Dialkyl-bernsteinsäureestersulfonate; sowie Eiweißhydrolysate und Lignin-Sulfitablaugen. Die zuvor genannten Sulfonsäuren werden vorteilhafterweise in Form ihrer neutralen oder gegebenenfalls basischen Salze verwendet.

Zu den kationischen Tensiden gehören beispielsweise quaternierte Ammoniumsalze, insbesondere Alkyltrimethylammonium- und Dialkyldimethylammonium-Halogenide und -Alkylsulfate sowie Pyridin- und Imidazolin-Derivate, insbesondere Alkylpyridinium-Halogenide.

Zu den nichtionischen Tensiden gehören insbesondere
- Fettalkohol-polyoxyethylen-ester, beispielsweise Laurylalkohol-polyoxyethylenetheracetat,
- Alkyl-Polyoxyethylen- und -polyoxypropylen-ether, z.B. von iso-Tridecylalkohol und Fettalkohol-Polyoxy-ethylenether, Alkylarylalkohol-Polyoxyethylenether, z.B. Octylphenol-Polyoxyethylenether,
- alkoxylierte tierische und/oder pflanzliche Fette und/oder Öle, beispielsweise Maisölethoxylate, Rizinusölethoxylate, Talgfettethoxylate,
- Glycerinester, wie beispielsweise Glycerinmonostearat,
- Fettalkoholalkoxylate und oxoalkoholalkoxylate, insbesondere vom Typ
   R²²O-(R¹⁹O)ₓ(R²⁰O)_{y}R²¹ mit R¹⁹ und R²⁰ unabhängig voneinander = C₂H₄, C₃H₆, C₄H₈ und R²¹ = H, oder C₁-C₁₂-Alkyl, R = C₃-C₃₀-Alkyl oder C₆-C₃₀-Alkenyl, x und y unabhängig voneinander 0 bis 50, wobei nicht beide für 0 stehen können, wie iso-Tridecylalkohol und Oleylalkohol-polyoxyethylenether,
- Alkylphenolalkoxylate, wie beispielsweise ethoxyliertes iso-Octyl-, Octyl- oder Nonyl-phenol, Tributylphenol-polyoxyethylenether,
- Fettaminalkoxylate, Fettsäureamid- und Fettsäurediethanolamidalkoxylate, insbesondere deren Ethoxylate,
- Zuckertenside, Sorbitester, wie beispielsweise Sorbitanfettsäureester (Sorbitanmonooleat, Sorbitantristearat), ethoxylierte Carbonsäuren und Ester mono- oder polyfunktioneller Alkohole wie Polyoxyethylensorbitanfettsäureester, Alkyl(poly)glycoside, N-Alkylgluconamide,
- Alkylmethylsulfoxide,
- Alkyldimethylphosphinoxide, wie beispielsweise Tetradecyldimethylphosphinoxid.

Zu den amphoteren Tensiden gehören beispielsweise Sulfobetaine, Carboxybetaine und Alkyldimethylaminoxide, z.B. Tetradecyldimethylaminoxid.

Zu den polymeren Tensiden gehören beispielsweise Di-, Tri- und Multiblockpolymere vom Typ (AB)ₓ, ABA und BAB, z.B. PolystyrolBlock-Polyethylenoxid, und AB-Kammpolymere, z.B. Polymethacrylatcomb-Polyethylenoxid sowie insbesondere Ethylenoxid-Propylenoxid-Blockcopolymere bzw. deren Endgruppen-verschlossenen Derivate, wie sie z.B. in Fiedler H.P. Lexikon der Hilfsstoffe für Pharmazie, Kosmetik und angrenzende Gebiete, Editio Cantor Verlag Aulendorf, 4. Aufl. 1996 unter den Stichwörtern "Pluronics", "Poloxamer" zu finden sind. Bevorzugt sind in diesem Zusammenhang die gegebenenfalls Endgruppen-verschlossenen Ethylenoxid/Propylenoxid-Blockcopolymere der Formel R¹⁶O-(C₂H₄O)ₚ-(C₃H₆O)_{q}-(C₂H₄O)ᵣ-R¹⁷ oder inverse Typen der Formel R¹⁶O-(C₃H₆O)ₚ-(C₂H₄O)_{q}-(C₃H₆O)ᵣ-R¹⁷, wobei p, q, r unabhängig voneinander einem Wert im Bereich von 2 bis 300, bevorzugt 5 bis 200 und insbesondere 10 bis 150 entsprechen und R¹⁶, R¹⁷ unabhängig voneinander für Wasserstoff oder C₁-C₄-Alkyl, C₁-C₄-Alkyl-CO, insbesondere Methyl, t-Butyl und Acetyl, und weitere zum Endgruppenverschluß geeignete Gruppen stehen. Das gewichtsmittlere Molekulargewicht geeignter Blockcopolymerer beträgt inder Regel 500 bis 50.000. Die in der Praxis verwendeten Blockcopolymere dieses Typs stellen im allgemeinen Gemische verschiedener Polymerketten dar, deren Molekulargewicht und insbesondere EO/PO-Verteilung in gewissen Grenzen variiert. Deshalb geben p, q und r den mittleren Alkoxylierungsgrad des jeweiligen Molekülabschnitts an. Die oberflächenaktiven Eigenschaften der EO/PO-Blockcopolymere hängen von der Größe und Anordnung der EO- bzw. PO-Blöcke ab. In der Regel bilden der oder die EO-Blöcke den hydrophilen Teil des Moleküls, während der oder die PO-Blöcke den hydrophoben Teil des Moleküls bilden. EO/PO-Blockpolymere lassen sich in an sich bekannter Weise durch Anlagerung von Ethylenoxid an Propylenglykole bzw. Propylenoxid an Ethylenglykole herstellen. Demnach ergibt sich für die Werte von p und r in der Regel eine herstellungsbedingte Übereinstimmung. Darüber hinaus sind viele Vertreter derartiger Blockcopolymerer und inverser Blockcopolymere im Handel erhältlich. Zu nennen sind hier beispielsweise die unter der Marke Pluronic von der BASF vertriebenen EO/PO-Blockcopolymere der Formel (IVa), insbesondere die Ausführungsformen L 121 mit 10 Gew.-% EO und einem gewichsmittleren Molekulargewicht von 4400 bzw. p+r=10; q=68; 10 R 5 mit 50 Gew.-% EO und einem gewichsmittleren Molekulargewicht von 1950 bzw. p+r=22; q=17; 17 R 5 mit 40 Gew.-% EO und einem gewichsmittleren Molekulargewicht von 2650 bzw. p+r=24; q=27; 25 R 4 mit 40 Gew.-% EO und einem gewichsmittleren Molekulargewicht von 3600 bzw. p+r=33; q=37; PE 6400 mit 40 Gew.-% EO und einem gewichtsmittleren Molekulargewicht von 2900 bzw. p+r=26; q=30, PE 6800 mit 80 Gew.-% EO und einem gewichsmittleren Molekulargewicht von 8000 bzw. p+r=145; q=28; PE 10500 mit 50 Gew.-% EO und einem gewichtsmittleren Molekulargewicht von 6500 bzw. p+r=74; q=56. EO/PO-Blockcopolymere sind auch unter der CTFA-Bezeichnung Poloxamer bekannt. Erfindungsgemäß brauchbare Poloxamere sind beispielsweise in H.P. Fiedler: Lexikon der Hilfsstoffe für Pharmazie, Kosmetik und angrenzende Gebiete; Editio Cantor Verlag, Aulendorf, 4. überarbeitete und ergänzte Auflage (1996) 1203 genannt. Ferner sind die unter der Marke Synperonics von der Firma Uniqema/ICI, insbesondere die PE F, PE L und PE P-Typen, und die unter der Marke Genapol von der Firma Clariant, insbesondere Genapol PF 20, 80 und 10 mit 20, 80 bzw. 10 Gew.-% EO, vertriebenen EO/PO-Blockcopolymerisate zu nennen. Weiterhin können die unter der Marke Pluronic von der BASF vertriebenen inversen EO/PO-Blockcopolymere genannt werden. Endgruppen-verschlossene EO/PO-Blockcopolymere basieren in der Regel auf den zuvor beschriebenen Blockcopolymeren. In derartigen Endgruppen-verschlossenen Blockcopolymeren sind die endständigen Hydroxy-Gruppen mit geeigneten Gruppen umgesetzt, vorzugsweise mit C₁-C₄-Alkyl- oder -Alkoylgruppen, insbesondere Methyl-, t-Butyl-, und Acetylgruppen, verethert bzw. verestert.

Weitere Tenside, die hier beispielhaft genannt werden können, sind Perfluortenside, Silikontenside, Phospholipide, wie beispielsweise Lecithin oder chemisch modifizierte Lecithine, Aminosäuretenside, z.B. N-Lauroylglutamat und oberflächenaktive Homo- und Copolymere, z.B. Polyvinylpyrrolidon, Polyacrylsäuren in Form ihrer Salze, Polyvinylalkohol, Polypropylenoxid, Polyethylenoxid, Maleinsäureanhydrid-Isobuten-Copolymere und Vinylpyrrolidon-Vinylacetat-Copolymere.

Sofern nicht spezifiziert, handelt es sich bei den Alkylketten der oben aufgeführten Tenside um lineare oder verzweigte Reste mit üblicherweise 8 bis 20 Kohlenstoffatomen.

Vorzugsweise ist das oberflächenaktive Hilfsmittel im Rahmen der Komponente (c) ausgewählt unter (c1) Alkylglykosiden, (c2) Alkylsulfonaten, Alkylsulfaten, Alkylarylsulfonaten und Alkylarylsulfaten sowie (c3) quaternierten Ammoniumsalzen.

Der Begriff "Alkylglycoside" (häufig auch als Alkylpolyglycoside, kurz APG, bezeichnet), ist eine Sammelbezeichnung für die durch Umsetzung von Zuckern und aliphatischen Alkoholen zugänglichen Produkte. Die Zuckerkomponente basiert in der Regel auf Mono-, Oligo- und/oder Polysacchariden, die sich aus einer oder mehreren, gleichen oder verschiedenen Aldosen und/oder Ketosen, wie Glukose, Fruktose, Mannose, Galaktose, Thalose, Gulose, Allose, Altrose, Idose, Arabinose, Xylose, Lyxose oder Ribose, zusammensetzen. Neben den davon abzuleitenden Monosacchariden, insbesonder Glukose, sind beispielsweise Disaccharide, insbesondere Isomaltose und Maltose, Oligosaccharide, insbesondere Maltotriose und Maltotetraose, sowie oligomere bzw. polymere Glucose zu nennen.

Der Begriff "Alkyl" steht in Zusammenhang mit dem Begriff "Alkylglycoside" in der Regel für einen gesättigten oder ungesättigten, verzweigten oder unverzweigten aliphatischen Rest mit 3 bis 30 Kohlenstoffatomen. Ungesättigte Reste können ein- oder mehrfach ungesättigt sein und weisen vorzugsweise 1 bis 3 Doppelbindungen auf. Alkylglycoside auf Basis längerkettiger Reste werden häufig auch als Fettalkylglycoside bezeichnet. Hier sind insbesondere Reste mit wenigstens 8, vorzugsweise 8 bis 20 und insbesondere 12 bis 18 Kohlenstoffatome von Bedeutung. Vor allem können an dieser Stelle die Alkylreste mit entsprechender Kohlenstoffanzahl genannt werden, die verzweigt sind, wie n-Octyl, n-Nonyl, n-Decyl, N-Undecyl, n-Dodecyl, n-Tridecyl, n-Tetradecyl, n-Hexadecyl und n-Octadecyl, bzw. unverzweigt sind, wie 2-Ethylhexyl und die Alkylreste in Oxoalkohol-Gemischen.

Bei den Alkylglycosiden von praktischer Bedeutung handelt es sich in der Regel um ein Gemisch verschiedener Substanzen. Insbesondere variiert im Gemisch die zugrundeliegende Zuckerkomponente und hier vor allem der Polymerisationsgrad.

Erfindungsgemäß bevorzugt sind Alkylglycoside mit einem mittleren Polymerisationsgrad im Bereich von 1,0 bis 6,0 und insbesondere von 1,1 bis 2,0.

Erfindungsgemäß insbesondere bevorzugt sind Alkylglucoside, d.h. ein Gemisch aus monomerer, dimerer, oligomerer und/oder polymerer Glucose mit entsprechender Derivatisierung. Dabei handelt es sich bei dem Alkylmonoglucosid um ein Gemisch aus Alkyl-α-D- und Alkyl-β-D-Glucopyranosid sowie geringen Anteilen des entsprechenden Glucofuranosids. Entsprechendes gilt für die Di-, Oligo- und Polyglucoside.

Hierzu gehören beispielsweise Alkylglucoside der Formel VII

R¹⁰O(Z)ₐ

worin R¹⁰ für einen Alkylrest mit 3 bis 30 und vorzugsweise 8 bis 18 Kohlenstoffatomen steht, Z ein Glucoserest ist und a einen Wert im Bereich von 1 bis 6 und vorzugsweise 1 bis 2 aufweist.

Die Umsetzung von Zuckern mit Alkohol zur Herstellung der Alkylglycoside kann in an sich bekannter Weise erfolgen. Zweckmäßig ist eine sauerkatalysierte Reaktion, die sogenannte Fischer-Reaktion. Produktionstechnisch fallen in der Regel wässrige Konzentrate an, beispielsweise solche mit einem Alkylglycosid-Gehalt von etwa 50 bis 70 Gew.-%. Je nach Herstellprozess können die Konzentrate geringe Mengen an nicht umgesetzten Alkoholen bzw. Fettalkoholen oder Zuckern enthalten. Brauchbare Verfahren zur Herstellung von Alkylglycosiden werden beispielsweise in EP 0 635 022 und EP 0 616 611 beschrieben.

Eine Vielzahl erfindungsgemäß geeigneter Alkylglycoside ist im Handel erhältlich. Zu nennen sind beispielsweise unter den Handelsnamen Agrimul®, PG, APG®, Plantaren® oder Glucopon® (allesamt von der Firma Henkel), Lutensol® (BASF), Atplus® (ICI Surfactants), Triton® (Union Carbide) oder Simulsol® vertriebenen Produkte.

Erfindungsgemäß besonders bevorzugt sind aus der Gruppe der Alkylglucoside folgende:
Alkylglucoside mit einem 2-Ethylhexyl-Rest und einem mittleren Polymerisationsgrad von 1,6, z.B. erhältlich unter dem Namen AG 6202;
Alkylglucoside mit C₁₀-C₁₂-Alkylresten und einem mittleren Polymerisationsgrad von 1,3, z.B. erhältlich unter dem Handelsnamen Lutensol® GD70.

Alkylsulfonate und Alkylarylsulfonate bzw. Alkylsulfate und Alkylarylsulfate im Sinne der vorliegenden Erfindung sind bevorzugt Verbindungen der Formel (V)

R⁶-(O)_{b}(EO)_{c}SO₃⁻ M^{(+,++)} (V),

wobei R⁶ eine aliphatische Gruppe, insbesondere eine Alkylgruppe, mit 6-24 Kohlenstoffatomen, die geradkettig oder verzweigt, gesättigt oder ein- oder mehrfach ungesättigt sein kann, oder eine gegebenenfalls 1-, 2- oder 3-fach mit C₁₋₃₀-Alkyl substituierte aromatische Gruppe, insbesondere Phenylgruppe, darstellt; b für 0 oder 1 (Sulfonate bzw. Sulfat) und c (Ethoxylierungsgrad) für eine ganze Zahl von 0 bis 50 steht; und M für eine ein- oder zweiwertige kationische Gruppe, insbesondere ein Alkali, Erdalkali- oder Ammoniumkation, beispielsweise Natrium, Kalium, Magnesium, Calcium, oder Ammonium steht. Verbindungen der Formel V im Sinne der vorliegenden Erfindung sind beispielsweise Alkylsulfonate, Fettalkylsulfonate, Alkylarylsulfonate, Fettalkylarylsulfonate, Alkylsulfate, Fettalkylsulfate oder Alkylphenol-polyoxyethersulfate. Bevorzugt kommen ausgewählte aliphatische Sulfonate, Alkylarylsulfonate oder Alkyl-phenoxy-Ethersulfate in Frage.

Bevorzugte Hilfsstoffe aus der Gruppe der Alkylsulfonate und Alkylarylsulfonate (Gruppe c2)) sind im Sinne der vorliegenden Erfindung beispielsweise die folgenden: Wettol®, insbesondere Wettol® EM 1 (Dodecylbenzolsulfonsäure-Ca-Salz) oder Wettol® EM 11 (Ca-Alkylarylsulfonat); Emulphor®, insbesondere Emulphor® OPS 25 (Octylphenol-(EO)₂₅-sulfat, Na-Salz); Lutensit® insbesondere Lutensit® A-E S (Isononylphenol-tetraethoxysulfat, Na-Salz) oder Lutensit® A- PS (Alkylsulfonat, Na-salz); ALBN 50 (Dodecylbenzolsulfonat, Na-Salz).

Quarternierte Ammoniumsalze im Sinne der vorliegenden Erfindung sind Verbindungen der Formel (VI) 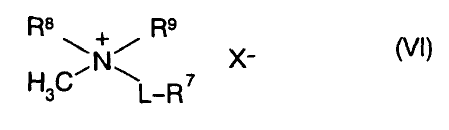 mit folgenden Bedeutungen:
- R⁷: C₆-C₂₄ Alkyl;
- R⁸: Wasserstoff, C₁-C₂₄ Alkyl-, Benzyl, C₁-C₁₂-Alkyl-benzyl oder Hydroxy-Polyethoxy-ethyl,
- R⁹: hat die gleiche Bedeutung wie R⁸ , wobei R⁸ und R⁹ gleich oder verschieden sein können,
- L: C₁-C₆-Alkylen oder C₁-C₆-Alkylenaminocarbonyl,
- X: eine anionische Gruppe, beispielsweise Chlorid, Sulfat, Methosulfat, C₂-C₁₆-Alkyl-Sulfonat, C₂-C₁₆-Alkylsulfat, Phenylsulfonat, Naphthylsulfonat, C₁-C₂₄-Alkyl-phenyl-sulfonat, C₁-C₂₄-Alkyl-naphthyl-sulfonat.

Die oben genannten längerkettigen Alkylgruppen ab 8 Kohlenstoffatome werden in der Literatur auch als Fettalkylgruppen bezeichnet. In der Definition von R⁸ und R⁹ stellen Hydroxy-Polyethoxy-Ethyl-Gruppen bevorzugt solche Gruppen mit einer Kettenlänge von 0 - 10 Einheiten dar. In der Definition von A ist eine Alkylengruppe bevorzugt eine Methylen-, Ethylen- oder Propylengruppe.

Bevorzugte Hilfsstoffe aus der Gruppe der quarternierten Ammoniumsalze (Gruppe c2)) sind im Sinne der vorliegenden Erfindung beispielsweise die folgenden: Rewoquat®, insbesondere Rewoquat® CPEM (Cocospentaethoxymethyl-ammonium-methosulfat) oder Rewoquat^{®} RTM 50 (Ricinolsäure-propylamido-trimethyl-ammonium-methosulfat); Protecol^{®}, insbesondere Protecol® KLC 50 (Dimethyl-n-alkylbenzyl-ammonium-chlorid).

Der Zusatz der Komponente (c) führt überraschenderweise zu einer weiteren Wirkungssteigerung der erfindungsgemäßen Mittel.

Der Anteil der Komponente (c) am Gesamtgewicht des Mittels beträgt - sofern vorhanden - in der Regel 10 bis 60 Gew.-%, vorzugsweise 15 bis 50 Gew.-% und insbesondere 20 bis 45 Gew.-%. Die Komponente (c1) wird insbesondere in wäßrigen Mitteln mit einem Anteil von in der Regel 2 bis 50 Gew.-% und vorzugsweise 10 bis 40 Gew.-% eingesetzt.

Die erfindungsgemäßen Mittel können (d) Wasser enthalten. Das Wasser dient vor allem zum Lösen der Wirkstoffkomponente (a), insbesondere (a2). Darüber hinaus begünstigen hohe Wasseranteile die Homogenität und Fließfähigkeit erfindungsgemäßer Mittel. So kann es zweckmäßig sein, dass der Anteil von Wasser am Gesamtgewicht des Mittels mehr als 10 Gew.-%, vorzugsweise mehr als 20 Gew.-% und insbesondere mehr als 25 Gew.-% beträgt. Allerdings können sich hohe Wasseranteile durch Viskositätsverminderung ungünstig auf die Sedimentation von Feststoffanteilen auswirken, wenn diese z.B. in Form von SC-Anteilen vorliegen. Diesen Aspekten zufolge ist es von Vorteil, wenn der Anteil an Wasser am Gesamtgewicht des Mittels weniger als 60 Gew.-%, vorzugsweise weniger als 50 Gew.-% und insbesondere weniger als 45 Gew.-% beträgt.

Gemäß einer besonderen Ausführungsform der vorliegenden Erfindung umfassen die Mittel als Komponente (e) mindestens einen weiteren Hilfsstoff.

Die Komponente (e) kann vielerlei Zwecke erfüllen. Die Wahl geeigneter Hilfsstoffe erfolgt den Anforderungen entsprechend üblicherweise durch den Fachmann.

Beispielsweise sind weitere Hilfsstoffe ausgewählt unter
(e1) pflanzenverwertbaren Mineralien und Spurenelementen;
(e2) Chelatbildnern;
(e3) weiteren Lösungs- oder Verdünnungsmitteln;

Zu den pflanzenverwertbaren Mineralien und Spurenelementen gehören insbesondere anorganische Ammoniumsalzen, wie Ammoniumsulfat, Ammoniumnitrat, Ammoniumchlorid, Ammoniumphosphat oder weitere pflanzenverwertbare Mineralien oder Spurenelemente, insbesondere Ammoniumnitrat-Düngergranulate und/oder Harnstoff. Diese können beispielsweise als wässrige und gegebenenfalls gemischte Konzentrate, wie z. B. Ensol-Lösungen, in die erfindungsgemäßen Mittel eingebracht werden.

Sofern vorhanden, beträgt der Anteil der Komponente (e1) am Gesamtgewicht des Mittels in der Regel 0,1 bis 35 Gew.-% und vorzugsweise 0,2 bis 20 Gew.-%.

Bevorzugte Chelatbildner sind Schwermetall- und insbesondere Übergangsmetall-komplexierende Verbindungen, z.B. EDTA und dessen Derivate.

Sofern vorhanden, beträgt der Anteil der Komponente (e2) am Gesamtgewicht des Mittels in der Regel 0,001 bis 0,5 Gew.-%, vorzugsweise 0,005 bis 0,2 Gew.-% und insbesondere 0,01 bis 0,1 Gew.-%.

Neben Wasser können die Mittel weitere Lösungsmittel löslicher Bestandteile bzw. Verdünnungsmittel unlöslicher Bestandteile des Mittels umfasssen.

Prinzipiell brauchbar sind beispielsweise Mineralöle, synthetische Öle sowie pflanzliche und tierische Öle, sowie niedermolekulare hydrophile Lösungsmittel wie Alkohle, Ether, Ketone und ähnliches.

Einerseits sind daher vor allem aprotische bzw. apolare Lösungs- bzw. Verdünnungsmittel zu nennen, wie Mineralölfraktionen von mittlerem bis hohem Siedepunkt, z.B. Kerosin und Dieselöl, ferner Kohlenteeröle, Kohlenwasserstoffe, Paraffinöle, z.B. C₈- bis C₃₀-Kohlenwasserstoffe der n- oder iso-Alkan-Reihe oder Gemische davon, gegebenenfalls hydrierte oder teilhydrierte Aromaten oder Alkylaromaten aus der Benzol- oder Naphthalin-Reihe, z.B. aromatische oder cycloaliphatische C₇- bis C₁₈-Kohlenwasserstoffverbindungen, aliphatische oder aromatische Carbonsäure- oder Dicarbonsäureester, Fette oder Öle pflanzlichen oder tierischen Ursprungs, wie Mono-, Di- und Triglyceride, in Reinform oder als Gemisch beispielsweise in Form öliger Naturstoffextrakte, z.B. Olivenöl, Sojaöl, Sonnenblumenöl, Castoröl, Sesamöl, Maisöl, Erdnussöl, Rapsöl, Leinsamenöl, Mandelöl, Rhizinusöl, Safloröl, sowie deren Raffinate, z.B. hydrierte oder teilhydrierte Produkte davon und/oder deren Ester, insbesondere Methyl- und Ethylester.

Beispiele für C₈- bis C₃₀-Kohlenwasserstoffe der n- oder iso-Alkan-Reihe sind n- und iso-Octan, -Decan, -Hexadecan, -Octadecan, -Eicosan, und vorzugsweise Kohlenwasserstoffgemische, wie Paraffinöl (das in technischer Qualität bis zu etwa 5% Aromaten enthalten kann) und ein C₁₈-C₂₄-Gemisch, das unter der Bezeichnung Spraytex-Ö1 im Handel von der Fa. Texaco erhältlich ist.

Zu den aromatischen oder cycloaliphatischen C₇- bis C₁₈-Kohlenwasserstoffverbindungen gehören insbesondere aromatische oder cycloaliphatische Lösungsmittel aus der Alkyl-Aromatenreihe. Diese Verbindungen können unhydriert, teilhydriert oder vollständig hydriert sein. Zu derartigen Lösungsmitteln gehören insbesondere Mono-, Di- oder Trialkylbenzole, Mono-, Di-, Trialkyl-substituierte Tetraline und/oder Mono-, Di-, Tri- oder Tetraalkyl-substituierte Naphthaline (Alkyl steht vorzugsweise für C₁-C₆-Alkyl). Beispiele derartiger Lösungsmittel sind Toluol, o-, m-, p-Xylol, Ethylbenzol, Isopropylbenzol, tert.-Butylbenzol und Gemische, wie die unter der Bezeichnung Shellsol und Solvesso vertriebenen Produkte der Fa. Exxon, z.B. Solvesso 100, 150 und 200.

Beispiele für geeignete Monocarbonsäureester sind Ölsäureester, insbesondere Methyloleat und Ethyloleat, Laurinsäureester, insbesondere 2-Ethylhexyllaurat, Octyllaurat und Isopropyllaurat, Isopropylmyristat, Palmitinsäureester, insbesondere 2-Ethylhexylpalmitat und Isopropylpalmitat, Stearinsäureester, insbesondere Stearinsäure-n-butylester und 2-Ethylhexansäure-2-ethylhexylester.

Beispiele für geeignete Dicarbonsäureester sind Adipinsäureester, insbesondere Dimethyladipat, Di-n-butyladipat, Di-n-octyladipat, Di-iso-octyladipat, auch als Bis-(2-ethylhexyl)adipat bezeichnet, Di-n-nonyladidipat, Di-iso-nonyladidipat und Ditridecyladipat; Bernsteinsäureester, insbesondere Di-n-octylsuccinat und Di-isooctylsuccinat, und Di-(iso-nonyl)cyclohexan-1,2-dicarboxylat.

Der Anteil an den zuvor beschriebenen aprotischen Lösungs- bzw. Verdünnungsmitteln am Gesamtgewicht des Mittels beträgt in der Regel weniger als 30 Gew.-%, vorzugsweise weniger als 20 Gew.-% und insbesondere weniger als 5 Gew.-%.

Einige dieser aprotischen Lösungs- bzw Verdünnungsmittel haben adjuvante, d.h. insbesondere wirkungsfördernde Eigenschaften. Dies gilt insbesondere für besagte Mono- und Dicarbonsäuren. Unter diesem Aspekt können derartige Adjuvantien als Teil einer weiteren Formulierung (stand alone-Produkt) mit den erfindungsgemäßen Mitteln zu einem zweckmäßigen Zeitpunkt, in der Regel kurz vor der Applikation, vermischt werden.

Andererseits sind protische bzw. polare Lösungs- bzw. Verdünnungsmittel zu nennen, z.B. C₂-C₈-Monoalkohole wie Ethanol, Propanol, Isopropanol, Butanol, Isobutanol, tert-Butanol, Cyclohexanol und 2-Ethylhexanol, C₃-C₈-Ketone wie Diethylketon, t-Butylmethylketon und Cyclohexanon, sowie aprotische Amine, wie N-Methyl- und N-Octylpyrrolidon.

Der Anteil an den zuvor beschriebenen protischen bzw. polaren Lösungs- bzw. Verdünnungsmitteln am Gesamtgewicht des Mittels wird erfindungsgemäß gering gehalten und beträgt in der Regel weniger als 20 Gew.-%, vorzugsweise weniger als 15 Gew.-% und insbesondere weniger als 10 Gew.-%.

Auch Antiabsetzmittel können insbesondere für Suspensionskonzentrate verwendet werden. Diese dienen vor allem zur rheologischen Stabilisierung. Insbesondere sind in diesem Zusammenhang mineralische Produkte, z.B. Bentonite, Talcite und Herktorite, zu nennen.

Weitere gegebenenfalls brauchbare Zusätze sind z.B. unter Mineralsalzlösungen, welche zur Behebung von Ernährungs- und Spurenelementmängeln eingesetzt werden, nichtphytotoxischen Ölen und Ölkonzentraten, Antidriftreagenzien, Antischaummitteln, insbesondere solchen vom Silicon-Typ, beispielsweise das von der Firma Wacker vertriebene Silicon SL, und ähnlichem zu finden.

Gemäß einer besonderen Ausführungsform betrifft die vorliegende Erfindung Mittel, umfassend
(a1) 2 bis 35 Gew.-% wenigstens eines Wirkstoffs, der ausgewählt ist unter Wirkstoffen aus der Klasse der Triazole, vorzugsweise (a11) Metconazol und/oder (a12) Tebuconazol, oder eines landwirtschaftlich nutzbaren Salzes davon;
(a2) 20 bis 25 Gew.-% wenigstens eines Wirkstoffs der Formel (III), vorzugsweise (a21) N,N,N-Trimethyl-N-β-chlorethylammoniumchlorid der Formel (IIIa) und (a22) N,N-Dimethylpiperidiniumchlorid der Formel (IIIb) bzw. der entsprechenden Borate;
(b) 5 bis 40 Gew.-% wenigstens einer Carbonsäure der Formel (I), vorzugsweise Propionsäure und/oder Milchsäure; und vorteilhafterweise
(c) 15 bis 45 Gew.-% eines oberflächenaktiven Hilfsmittels, das ausgewählt ist unter (c1) Alkylglukosiden, (c2) Alkylsulfonaten, Alkylsulfaten, Alkylarylsulfonaten und Alkylarylsulfaten sowie (c3) quaternären Ammoniumsalzen.

Eine besondere Ausführungsform dieser Mittel sind wäßrige Mittel, vorzugsweise mit 20 bis 45 Gew.-% Wasser (Komponente d).

Im Übrigen könne diese Mittel weitere Hilfsstoffe enthalten, vorzugsweise bis zu 20 Gew.-% und insbesondere bis zu 10 Gew.-%.

Die Herstellung erfindungsgemäßer Mittel kann in an sich bekannter Weise erfolgen. Dazu werden zumindest Teile der Komponenten zusammengegeben. Hierbei ist zu beachten, daß Produkte, insbesondere handelsübliche Produkte, verwendet werden können, deren Bestandteile zu unterschiedlichen Komponenten beitragen können. Beispielsweise kann ein bestimmtes Tensid in einem aprotischen Lösungmittel gelöst sein, so daß dieses Produkt zu den erfindungsgemäßen Komponenten (c) und (e) beitragen kann. Ferner können geringe Anteile an unerwünschten Substanzen, z.B. den oben erwähnten protischen bzw. polaren Lösungs- unf Verdünnungsmitteln, mit handelsüblichen Produkten eingebracht werden. Als Gemisch sind die zusammengegebenen Produkte dann in der Regel intensiv miteinander zu einem homogenen Gemisch zu vermengen und erforderlichenfalls - z.B. im Falle von Suspensionen, zu vermahlen.

Beispielsweise können wässrige Wirkstofflösungen der quaternären Wirkstoffe der Formel III in einer Konzentration von 50 bis 80 Gew.-% vorgelegt und unter Rühren die Hilfsstoffe eingearbeitet werden. Anschließend kann man die Mischung mit einem Konzentrat eines Triazols, wie z. B. Metconazol, in einer Carbonsäure, z.B. in Propionsäure oder Milchsäure, versetzen. Alternativ kann zunächst der Triazol-Wirkstoff mit der Carbonsäure gelöst und vorgelegt werden.

Nimmt man an, dass die leicht basischen Teilstrukturen der heterocyclyclischen Triazol-Ringe der Wirkstoffe der Komponente (a1) beim Lösen mit den Carbonsäuren zunächst in die korrespondierenden, im Allgemeinen kristalline Verbindungen darstellenden Onium-Verbindungen übergehen und erst bei weiterer Zugabe von Carbonsäure erneut gelöst werden, ist es verfahrenstechnisch vorteilhaft, zunächst die Carbonsäuren vorzulegen und dann die festen Triazol-Wirkstoffe zuzugeben bzw. einzurühren.

Das Vermengen kann in an sich bekannter Weise erfolgen, z.B. durch Homogenisieren mit geeigneten Vorrichtungen wie KPG- oder Magnetrührern.

Gegenstand der vorliegenden Erfindung ist auch die Verwendung erfindungsgemäßer Mittel als Bioregulator bei einer Reihe verschiedenartiger Anwendungsmöglichkeiten, beispielsweise im Pflanzenanbau, z.B. in der Landwirtschaft und im Gartenbau.

Bioregulatorische Wirkstoffe können z.B. das Pflanzenwachstum beeinflussen (Wachstumsregulatoren).

Eine bioregulatorische Anwendung ist z.B. die Beinflussung des oberirdischen Pflanzenlängenwachstums (wuchs- oder wachstumsregulatorisch). Es können praktisch alle Entwicklungsstadien einer Pflanze erfaßt werden.

So läßt sich beispielsweise das vegetative Sproßwachstum der Pflanzen stark hemmen, was sich insbesondere in einer Reduzierung des Längenwachstums äußert. Die behandelten Pflanzen weisen demgemäß einen gedrungenen Wuchs auf; außerdem ist eine dunklere Blattfärbung zu beobachten. Als vorteilhaft für die Praxis erweist sich eine verminderte Intensität des Wachstums von Gräsern an Straßenrändern, Hecken, Kanalböschungen und auf Rasenflächen wie Park-, Sport- und Obstanlagen, Zierrasen und Flugplätzen, so daß der arbeits- und kostenaufwendige Rasenschnitt reduziert werden kann. Auch bei vielen Zierpflanzenarten ist ein kompakterer Wuchs wünschenswert.

Von wirtschaftlichem Interesse ist auch die Erhöhung der Standfestigkeit von lageranfälligen Kulturen wie Getreide, Mais, Raps und Sonnenblumen. Die dabei verursachte Verkürzung und Verstärkung der Sproßachse verringert oder beseitigt die Gefahr des "Lagerns" (des Umknickens) von Pflanzen unter ungünstigen Witterungsbedingungen vor der Ernte. Wichtig ist auch die wachstumsregulatorische Anwendung zur Hemmung des Längenwachstums und zur zeitlichen Veränderung des Reifeverlaufs bei Baumwolle. Damit wird ein vollständig mechanisiertes Beernten dieser Kulturpflanze ermöglicht. Bei Obst- und anderen Bäumen lassen sich mittels Wachstumsregulation Schnittkosten einsparen. Gleichzeitig wird ein günstigeres Verhältnis zwischen vegetativem Wachstum und Fruchtbildung erzielt. Außerdem kann die Alternanz von Obstbäumen durch Wachstumsregulation gebrochen werden. Durch die wachstumsregulatorische Anwendung kann auch die seitliche Verzweigung der Pflanzen vermehrt oder gehemmt werden. Daran besteht Interesse, wenn z. B. bei Tabakpflanzen die Ausbildung von Seitentrieben (Geiztrieben) zugunsten des Blattwachstums gehemmt werden soll.

Auch läßt sich beispielsweise bei Winterraps die Frostresistenz durch Wachstumsregulation erheblich erhöhen. Dabei werden die jungen Rapspflanzen nach der Aussaat und vor dem Einsetzen der Winterfröste trotz günstiger Wachstumsbedingungen in der vegetativen Entwicklung zurückgehalten. Das Längenwachstum und die Entwicklung einer zu üppigen (und dadurch besonders frostanfälligen) Blatt- bzw. Pflanzenmasse werden gehemmt. Dadurch wird auch die Frostgefährdung solcher Pflanzen verringert, die zum vorzeitigen Abbau der Blühhemmung und zum Übergang in die generative Phase neigen. Auch bei anderen Kulturen, z. B. Wintergetreide ist es vorteilhaft, wenn die Bestände durch wachstumsregulatorische Behandlung im Herbst zwar gut bestockt werden, aber nicht zu üppig in den Winter hineingehen. Dadurch kann der erhöhten Frostempfindlichkeit und - wegen der relativ geringen Blatt- bzw. Pflanzenmasse - auch dem Befall mit verschiedenen Krankheiten (z. B. Pilzkrankheit) vorgebeugt werden. Die Hemmung des vegetativen Wachstums ermöglicht außerdem bei vielen Kulturpflanzen eine dichtere Bepflanzung des Bodens, so daß ein Mehrertrag bezogen auf die Bodenfläche erzielt werden kann.

Außerdem lassen sich durch wachstumsregulation Mehrerträge sowohl an Pflanzenteilen als auch an Pflanzeninhaltsstoffen erzielen. So ist es beispielsweise möglich, das Wachstum größerer Mengen an Knospen, Blüten, Blättern, Früchten, Samenkörnern, Wurzeln und Knollen zu induzieren, den Gehalt an Zucker in Zuckerrüben, Zukkerrohr sowie Zitrusfrüchten zu erhöhen, den Proteingehalt in Getreide oder Soja zu steigern oder Gummibäume zum vermehrten Latexfluß zu stimulieren. Dabei können die Wirkstoffe Ertragssteigerungen durch Eingriffe in den pflanzlichen Stoffwechsel bzw. durch Förderung oder Hemmung des vegetativen und/oder des generativen Wachstums verursachen. Durch Pflanzenwachstumsregulation lassen sich schließlich sowohl eine Verkürzung bzw. Verlängerung der Entwicklungsstadien als auch eine Beschleunigung bzw. Verzögerung der Reife der geernteten Pflanzenteile vor oder nach der Ernte erreichen.

Von wirtschaftlichem Interesse ist beispielsweise die Ernteerleichterung, die durch das zeitlich konzentrierte Abfallen oder Vermindern der Haftfestigkeit am Baum bei Zitrusfrüchten, Oliven oder bei anderen Arten und Sorten von Kern-, Stein- und Schalenobst ermöglicht wird. Derselbe Mechanismus, das heißt die Förderung der Ausbildung von Trenngewebe zwischen Frucht- bzw. Blatt- und Sproßteil der Pflanze ist auch für ein gut kontrolliertes Entblättern von Nutzpflanzen wie beispielsweise Baumwolle wesentlich.

Durch Wachstumsregulation kann weiterhin der Wasserverbrauch von Pflanzen reduziert werden. Dies ist besonders wichtig für landwirtschaftliche Nutzflächen, die unter einem hohen Kostenaufwand künstlich bewässert werden müssen, z.B. in ariden oder semiariden Gebieten. Durch die wachstumsregulatorische Anwendung läßt sich die Intensität der Bewässerung reduzieren und damit eine kostengünstigere Bewirtschaftung durchführen. Unter dem Einfluß von Wachstumsregulatoren kann es zu einer besseren Ausnutzung des vorhandenen Wassers kommen, weil u. a. die Öffnungsweite der Stomata reduziert wird, eine dickere Epidermis und Cuticula ausgebildet werden, die Durchwurzelung des Bodens verbessert wird, die transpirierende Blattoberfläche reduziert wird, oder das Mikroklima im Kulturpflanzenbestand durch einen kompakteren Wuchs günstig beeinflußt wird.

Für Zierpflanzen, vor allem für Obstbäume und insbesondere für Raps ist die erfindungsgemäße Anwendung von besonderer Bedeutung.

Die erfindungsgemäße Verwendung der Wirkstoffkombination (a1) und (a2) als Bioregulator zeigt bei einer Reihe verschiedenartiger Anwendungsmöglichkeiten im Pflanzenanbau, sowohl in der Landwirtschaft als auch im Gartenbau, Vorteile gegenüber den Einzelwirkstoffen. Insbesondere können die an sich zur Bioregulation erforderlichen Aufwandmengen an einzelnen Wirkstoffen im Rahmen der erfindungsgemäßen kombinierten Anwendung reduziert werden. So ist eine Reduktion der bei Anwendung der Einzelkomponenten für eine bestimmte biologische Wirkungen erfoderlichen Aufwandmengen um mehr als 20 %, voteilhafterweise um mehr als 30 % und insbeosndere um mehr als 40 % möglich. Beispielsweise können erfindungsgemäß die Aufwandmenge an Wirkstoffen der Formel (III) auf weniger als 500 g und vorzugsweise weniger als 350 g pro ha, und die Aufwandmenge an Metconazol der Formel (II) oder landwitschaftlich nutzbarer Salze davon, auf weniger als 100 g und vorzugsweise weniger als 50 g und insbesondere weniger als 30 g pro ha bemessen werden. Überdies liefern vorteilhafte und besonders ausgewählte Hilfsmittelzugaben darüber hinaus vielfach eine bessere biologische Eigenschaften als die Summenwirkung der Einzelkomponenten im Tankmixverfahren.

Ein besonderer Gegenstand der vorliegenden Erfindung ist die Verwendung wenigstens eines bioregulatorisch wirksamen Wirkstoffs aus der Klasse der Triazole in Kombination mit wenigstens einem Wirkstoff der Formel (III) als Bioregulator zur Verbesserung des Wurzelwachstums. Zweck dieser Verwendung ist vor allem die Ausbildung einer erhöhten Anzahl an Wurzelsträngen, längerer Wurzeln und/oder einer erhöhten Wurzeloberfläche. Dadurch wird das Aneignungsvermögen der Pflanzen für Wasser und Nährstoffe verbessert. Dies bringt Vorteile insbesondere bei leichten, z.B. sandigen Böden, und/oder bei Niederschlagsmangel. Im Herbst wird insbesondere bei Winterraps eine größere Speicherwurzel ausgebildet, so daß im Frühjahr das neue Wachstum intensiver erfolgen kann. Das verbesserte Wurzelsystem sorgt im Frühjahr für eine festere Verankerung des Sprosses im Boden, so daß die Pflanzen deutlich standfester sind. Bei anderen Pflanzen repräsentiert die Speicherwurzel ganz oder zum großen Teil das zu erntende Pflanzenorgan (z.B. andere Brassicaceen, wie Rettich und Radieschen, aber auch Zuckerrüben, Möhren oder Chicoree).

Die Verbesserung des Wurzelwachstums ist insbesondere dann von Vorteil, wenn dies bei gleichzeitger Reduktion des vegetativen Wachstums, also insbesondere unter Hemmung des Sproßlängenwachstums (Einkürzung) und/oder unter Reduktion der Blatt- bzw. Pflanzenmasse erfolgt. Demnach richtet sich die vorliegende Verwendung vorteilhafterweise auf eine Verringerung des Quotienten aus Sproßmasse zu Wurzelmasse.

Diese auf die Wurzelausbildung gerichtete Anwendung erfolgt insbesondere im Getreideanbau, z.B. für Weizen, Gerste, Hafer und Roggen sowie Mais und Reis, und ganz besonders bei Pflanzen, die Speicherwurzeln ausbilden, wie Brassicaceen, z.B. Rettich und Radieschen, vor allem Raps und insbesondere Winterraps, und Zuckerrüben, Möhren oder Chicoree. In diesem Zusammmenhang ist insbesondere der Rapsbau zu nennen, wo die Verbesserung des Wurzelwachstums besonders deutlich zum Tragen kommt. Praktisch kann diese auf die Wurzelausbildung gerichtete Anwendung besondere Bedeutung bei bestimmten Gegebenheiten erlangen, z.B. bei relativ trockenen Böden und/oder während der Phase, in der die Pflanze das Wurzelsystem ausbildet. Bei gleichzeitiger Reduktion des Sproßlängenwachstums ergeben sich durch das verbesserte Wurzelwachstum besondere Vorteile.

Die erfindungsgemäße Verwendung der beschriebenen Wirkstoffe beinhaltet im Rahmen der Behandlung ein Verfahren. Dabei wird eine wirksame Menge an Wirkstoffkomponente (a1) und gegebenenfalls eine wirksame Menge an Wirkstoffkomponente (a2), in der Regel der landwirtschaftlichen Praxis entsprechend formuliert, auf die zu behandelnde Anbaufläche ausgebracht. Vorzugsweise werden die Wirkstoffkomponenten durch Spritzung über das Blatt der Pflanze zugeführt. Grundsätzlich kann die Aufwandmenge infolge der hohen Pflanzenverträglichkeit stark variiert werden. Typischerweise betragen die Applikationsmengen 0,3-3 1 pro ha, insbesondere 0,5-2,0 1/ha.

Spritzfähige Brühen enthalten normalerweise 0,0001 bis 10, vorzugsweise 0,001 bis 5, und insbesondere 0,002 bis 2,0 Gew.-% an Wirkstoffkomponente (a). Zur Herstellung einer üblichen Spritzbrühe können beispielsweise 0,2 bis 5,0, vorzugsweise 0,3 bis 3,0 und insbesondere 0,35 bis 2,0 1 eines Komponente (a) enthaltenden erfindungsgemäßen Wirkstoffkonzentrats mit Wasser auf 10 bis 2000 1, vorzugsweise 50 bis 1500 1 und insbesondere 100 bis 1000 verdünnt werden. Der Spritzbrühe können gegebenenfalls 0,1 Gew.-% bis 5 Gew.-% (bezogen auf Spritzbrühe) an weiteren anionischen, kationischen oder nicht-ionischen Tensiden, Hilfsmitteln, Polymeren und/oder weitere Wirkstoffen zugesetzt werden. Beispielhafte Stoffe für derartige Tenside und weitere Hilfsmittel sind nachstehend beschrieben. Insbesondere sind Stärke und Stärkederivate, z.B. eine Carboxyl- und Sulfonsäuregruppen enthaltende Stärke (Nu-Film der Union Carbide Corp.) sowie Spreitmittel und Extender, wie Vapor Guard der Miller Chemical & Fertilizer Corp., zu nennen. Ein besonderer Vorteil der erfindungsgemäßen Mittel ist es, bei der Zubereitung der Spritzbrühe und deren Applikation ohne weitere, insbesondere die vorstehend genannten, Tankmix-Additve auskommen zu können.

Die Applikation der Mittel kann in an sich bekannter Weise erfolgen, z.B. durch Versprühen der Spritzbrühen mit einer fahrbaren Spritzmaschine mittels feinstverteilender Düsen. Die hierfür gebräuchlichen Geräte und Arbeitstechniken sind dem Fachmann bekannt.

Im Rahmen der vorliegenden Beschreibung sind Mengenangaben im allgemeinen auf das Gesamtgewicht des Mittels zu beziehen, sofern nicht anderes angeben ist. Der Ausdruck "im wesentlichen" bezeichnet erfindungsgemäß in der Regel ein prozentuales Verhältnis von wenigstens 90 %, vorzugsweise von wenigstens 95 % und insbesondere von wenigstens 98 %.

Im Rahmen der vorliegenden Beschreibung umfassen Begriffe wie Alkyl, Alkoxy, etc. geradkettige oder verzweigte Kohlenwasserstoffgruppen, wie Methyl, Ethyl, n-Propyl, i-Propyl, n-Butyl, i-Butyl, sek-Butyl, t-Butyl, n-Pentyl, n-Hexyl, n-Octyl, 2-Ethylhexyl, n-Nonyl, iso-Nonyl, n-Decyl, iso-Decyl, n-Undecyl, iso-Undecyl, n-Dodecyl, iso-Dodecyl, n-Tridecyl, iso-Tridecyl, Stearyl, n-Eicosyl, vorzugsweise mit - soweit nichts anderes angegeben ist - 1 bis 25, insbesondere 1 bis 6 und besonders bevorzugt 1 bis 4 Kohlenstoffatomen.

Der Begriff "Alkenyl" steht für geradkettige oder verzweigte, 1-, 2-, 3-, 4-, 5- oder 6-fach ungesättigte Kohlenwasserstoffgruppen, vorzugsweise mit - soweit nichts anderes angegeben ist - 1 bis 25, insbesondere 1 bis 6 und besonders bevorzugt 1 bis 4 Kohlenstoffatomen. Insbesondere sind hier die Reste ein- oder mehrfach ungesättigter Fettsäuren zu nennen.

Der Begriff "Halogen" steht vorzugsweise für Fluor, Chlor, Brom und Iod, insbesondere für Fluor und vor allem für Chlor.

Die Erfindung wird durch die nachfolgenden Beispiele näher erläutert:

### Referenzbeispiel 1: Lösungseigenschaften

Die folgende Versuchsserie beschreibt Löseversuche und die vorteilhafte Verwendung von Carbonsäuren als Lösemittel für Triazole im Vergleich zu anderen Lösemitteln.

**Tabelle 1: Löslichkeit von Triazolen in ausgewählten Hilfsstoffen**

| | Löslichkeit von Triazolen [%] bei 20 °C | | | |
|---|---|---|---|---|
| Lösungsmittel | Epoxiconazol | Metconazol | Tebuconazol | Epoxic./Metc. in Mischung 10:6 |
| Aromatic 200 | 3,8 | 7,6 | | |
| Solvesso 150 | 2,1 | 3,2 | | |
| Propionsäure | 39,5 | > 30 | 57,2 | 21,9 |
| Milchsäure | 11,4 | | | |
| Essigsäure | | | 62,2 | |
| NOP | 11,4 | 38,16 | | |
| NMP | 22,6 | 49,7 | | |
| Milchsäure: Lutensol ON 70 2:1 | | 31,4 | | |
| NOP: Lutensol ON 70 2:1 | | 34,9 | | |
| γ-Butyrolacton: Lutensol ON 70 2:1 | | 26,5 | | |

Bei Epoxiconazol und anderen Triazolen zeigt Propionsäure ähnliche oder deutlich bessere Löseeigenschaften als NMP, NOP oder γ-Butyrolacton. Analoges gilt in Kombination mit oberflächenaktiven Hilfsmittel aus der Reihe der Alkohololigoethoxylate und Alkoholpolyethoxylate.

### Herstellungsbeispiele

### Referenzbeispiel 2: Formulierungen

Die in Beispiel 1 eingesetzten Tankmischungen werden hergestellt, indem man ein Emulsionskonzentrat mit 90 g/l Metconazol und ein wäßriges Konzentrat mit 600 g/l Mepiquatchlorid (Versuch T1) per Magnetrührer miteinander vermischt.

Die Fertigformulierungen F1 bis F15 werden hergestellt, indem man die Triazole zur vorgelegten Carbonsäure gibt und dabei zur schnelleren Lösung auf 40-60°C erwärmt. Anschließend werden die nicht-wässrigen und danach gegebenenfalls die wässrigen Hilfsmittel oder Wirkstoffe zugegeben.

Die Mischungen werden zuletzt durch 2-stündiges Nachrühren bei Raumtemperatur homogenisiert. Typische Ansatzgrößen sind 20 bis 100 g Fertigformulierung.

MQC und CCC werden jeweils als wässriges Vorkonzentrat (mit 600 g/l MQC bzw. 750 g/l CCC) eingesetzt. Sofern nicht anders angegeben sind bei nachfolgender Tabelle diese Wirkstoffe auf berechente 100 Gew.-% angeben. Die Wasseranteile der Vorkonzentrate wurden der Gesamtwassermenge zugeschlagen.

**Tabelle 2: Wirk- und Hilfsstoffe bestimmter SL-Formulierungen, angegeben als ["Bezeichnung"/"g/l"], vorbehaltlich anderer Angaben, Restanteil Wasser (ad 1 1)**

| Bsp | Komponente | | | |
|---|---|---|---|---|
| | (a1) | (a2) | (b) | (c) |
| F1 | Met/21 | MQC/300 | Prop/70 | AG6202/240 |
| | | | | Lutensol 0N70/160 |
| F2 | Met/21 | MQC/300 | Prop/70 | AG6202/160 |
| | | | | HOE S4212/240 |
| F3 | Met/21 | MQC/300 | Prop/70 | AG6202/240 |
| | | | | Wettol EM 11/160 |
| F4 | Met/21 | MQC/300 | Prop/70 | Rew UTM/200 |
| | | | | Emulgon EL20/100 |
| | | | | Pluronic PE 9200/100 |

**Tabelle 3: Wirk- und Hilfsstoffe bestimmter SL-Formulierungen, angegeben als ["Bezeichnung"/"Gew-%-], vorbehaltlich anderer Angaben, Restanteil Wasser (ad 1 1)**

| Bsp | Komponente | | | | |
|---|---|---|---|---|---|
| | (a1) | (a2) | (b) | (c) | weiteres |
| F5 | Met/4,36 | - | Prop/12,96 | AG6202/44,44 | Silicon SL/0,09 |
| | | | | Lutensol ON70/4,63 | |
| | | | | Wettol EM11/29,62 | |
| F6 | Met/4,36 | - | Prop/14,54 | Lutensol T08/33,93 | Silicon SL/0,097 |
| | | | | Benzylalkohol/8,73 | |
| | | | | Rhenalyd WL922/9,7 | |
| F7 | Met/4,36 | - | Prop/14,53 | Lutensol TO8/33,9 | Silicon SL/0,097 |
| | | | | Benzylalkohol/8,72 | |
| | | | | Rhenalyd WL922/9,69 | |
| F8 | Met/5 Epox/10 | - | Prop/10 | Lutensol AP10/20 | Solvesso 200/55 |
| F9 | Met/5 Epox/10 | - | - | Lutensol AP10/30 | Solvesso 200/55 |
| F10 | Tebu/6,5 | CCC/30 | Prop/27,3 | Lutensol ON30/18,18 | |
| F11 | Tebu/6,5 | CCC/30 | Prop/27,3 | Lutensol 0N70/18,18 | |
| F12 | Tebu/6,5 | CCC/30 | - | Lutensol ON30/18,18 | Benzylalkohol/27,3 |
| F13 | Tebu/6,5 | CCC/30 | - | Lutensol ON70/18,18 | Benzylalkohol/27,3 |
| F14 | Met/2,8 | MQC/25,2 | - | AG6202/23,3 | NaOH/1,21 |
| | | | | Lutensol A-LBS/9,3 | |
| | | | | Lutensol A3N/9,3 | |
| F15 | Met/2,8 | MQC/25,2 | - | AG6202/23,3 | NaOH/1,21 |
| | | | | Lutensol A-LBS/9,3 | |
| | | | | Lutensol A3N/9,3 | |

### Beispiele 1: Biologische Wirksamkeit (Sproßlängenwachstum)

Winterraps (cv. Pronto) wurde im Herbst ausgesät und etwa einen Monat später den Angaben in Tabelle 3 entsprechend behandelt. Einige Wochen später wurde das Sproßlängenwachstum sowie die Wurzelbildung beurteilt. Die Ergebnisse zum Längenwachstum sind in Tabelle 3 zusammengestellt.

**Tabelle 3: Sproßlängenwachstum in Winterraps (Bonitur A1 and A2)**

| Wirkstoff | [g/ha] | Stadium A1: Wuchshöhe [cm] | Stadium A1:Wuchshöhe [%] | Stadium A2: Wuchshöhe [cm] | Stadium A2:Wuchshöhe [%] |
|---|---|---|---|---|---|
| Kontrolle | - | 20 | 100 | 35 | 100 |
| T1 | 428 642 | 15 15 | 75 75 | 19 15 | 54 43 |
| S1 | 400 | 20 | 100 | 34 | 96 |
| S2 | 600 | 20 | 100 | 34 | 96 |
| S2 | 28 | 16 | 81 | 21 | 61 |
| S2 | 42 | 15 | 75 | 20 | 57 |
| S2 | 84 | 15 | 75 | 16 | 46 |
| F1 | 428 | 15 | 75 | 19 | 54 |
| F1 | 642 | 15 | 75 | 15 | 43 |
| F2 | 428 | 15 | 75 | 16 | 46 |
| F2 | 642 | 14 | 69 | 14 | 39 |
| F3 | 428 | 15 | 75 | 13 | 36 |
| F3 | 642 | 13 | 63 | 10 | 29 |
| F4 | 428 | 15 | 75 | 20 | 57 |
| F4 | 642 | 14 | 69 | 14 | 39 |

Die Ergebnisse zeigen, dass Mepiquatchlorid allein nur eine leichte Einkürzung bei der 2. Bonitur liefert. Die Einkürzungswirkung von Metconazol ist dagegen stark ausgeprägt. Dennoch findet man im Tankmix beider Wirkstoffe und bei den erfindungsgemä-ßen, lagestabilen Fertigformulierungen F1-4 deutliche synergistische Effekte. Besonders fällt die Variante F3 auf, die mit Propionsäure und dem Alkylglukosid zwei vorteilhafte und erfindungsgemäße Hilfsstoffe aufweist.

### Beispiele 2: Homogenität und Lagerstabilität

Die Mischungen F5-7 waren auch bei einer Temperaturbelastung bis 50 °C 3 Monate lagerstabil und einphasig. Die Variante F7 war leicht trüb, in sich aber noch homogen. Die leichten Trübungen sind verursacht durch das Antischaummittel Silicon SL.

Die Mischungen F8, F10 und F11 waren klare, homogene Lösungen ohne Kristallanteil und zeigten im Tankmixverfahren als 1 %-ige Lösung kein kristallines Sediment. Die Mischung F9 hingegen war ein 2-Phasensystem, in der die Flüssigphase heterogene Feststoffanteile aufwies. Ein Tankmix ließ sich nicht herstellen.

Die Mischungen F12 bis F15 belegen, dass auch unter Zusatz von Benzylalkohol in Abwesenheit der Carbonsäure lediglich 2-phasige, heterogene Gemische erhalten werden, die nicht applizierbar sind.

Die in obigen Beispielen verwendeten Wirk- und Hilfsstoffe sind in nachfolgender Tabelle 4 erläutert.

**Tabelle 4:**

| Name | Strukturtyp/Einsatzstoff | Hersteller |
|---|---|---|
| CCC | Chlorcholinchlorid, Chlormequat-Chlorid | |
| MQC | Mepiquatchlorid | |
| Met | Metconazol | |
| Tebu | Tebuconazol | |
| Epox | Epoxiconazol | |
| Prop | Propionsäure | |
| NOP | N-Octylpyyrolidon | |
| NMP | N-Methylpyyrolidon | |
| AG6202 | 2-Ethylhexylglukosid | Witco |
| Emulgon EL20 | Rizinusöl x 20 EO | BASF |
| HOE S4212 | Tallölfettaminethoxylat | Clariant |
| Lutensol A3N | C12/14-Fettalkohol x 3 EO | BASF AG |
| Lutensol A7N | C12/14-Fettalkohol x 7 EO | BASF AG |
| Lutensol A-LBS | Dodecylbenzolsulfonsäure | BASF AG |
| Lutensol AP10 | Nonylphenol x 10 EO | BASF AG |
| Lutensol ON30 | C9/11-Fettalkohol x 3 EO | BASF AG |
| Lutensol ON70 | C9/11-Fettalkohol x 7 EO | BASF AG |
| Lutensol TO8 | i-C13-Oxoalkohol x 8 EO | BASF AG |
| Rhenalyd WL922 | wasserlösliches, modifieziertes Leinöl | Neste-Chemicals |
| Rewocid UTM | Undecylensäureamidopropyl-N-trimethyl-ammonium-methosulfat | Witco |
| Silicon SL | Polydimethylsiloxan | Wacker |
| Solvesso 150 | aromatischer Kohlenwasserstoff, alkyliert | Exxon |
| Solvesso 200 | aromatischer Kohlenwasserstoff, alkyliert | Exxon |
| Wettol EM11 | Ca-Alkylarylsulfonat | BASF AG |

## Patentansprüche

1. Mittel, umfassend
(a1) wenigstens einen Wirkstoff aus der Klasse der Triazole oder ein landwirtschaftlich nutzbares Salz davon,
(b) wenigstens eine geradkettige oder verzweigte, gesättigte oder ungesättigte aliphatische Carbonsäure,
(d) Wasser,
wobei das Molverhältnis von Komponente (b) zu Komponente (a1) größer als 1 ist, wobei der auf das Gesamtgewicht des Mittels bezogene Anteil der Komponente (a1) mehr als 1 Gew.-% und der Komponente (d) mehr als 10 Gew.-% ausmacht.

2. Mittel nach Anspruch 1, **dadurch gekennzeichnet, daß** das Molverhältnis von Komponente (b) zu Komponente (a1) größer als 4 ist.

3. Mittel nach Anspruch 1 oder 2, **dadurch gekennzeichnet, daß** die Carbonsäure ausgewählt ist unter Carbonsäuren der Formel (I)
R³[-CR⁴(R⁵)]ₙ-COOH (I)
wobei R³, R⁴, R⁵ und n die folgenden Bedeutungen haben:
R³ Wasserstoff, C₁-C₂₅-Alkyl, oder C₁-C₂₅-Alkenyl;
R⁴ Wasserstoff, C₁-C₂₅-Alkyl, oder C₁-C₂₅-Alkenyl;
R⁵ Wasserstoff, Hydoxy, C₁-C₆-Alkoxy oder Halogen; und
n 0, 1, 2 oder 3, oder
R⁴ und R⁵ zusammen genommen mit dem Kohlenstoff, an das sie gebunden sind, eine Carbonylgruppe bilden.

4. Mittel nach Anspruch 3, **dadurch gekennzeichnet, daß**
R³ für Wasserstoff oder C₁-C₅-Alkyl steht;
R⁴ Wasserstoff ist;
R⁵ für Wasserstoff oder Hydroxy steht; und
n 1 ist.

5. Mittel nach Anspruch 1, **dadurch gekennzeichnet, daß** die Carbonsäure ausgewählt ist unter Propionsäure, Milchsäure, Ölsäure, Essigsäure und Glyoxylsäure.

6. Mittel nach einem der vorhergehenden Ansprüche, **dadurch gekennzeichnet, daß** der Anteil der Komponente (b) am Gesamtgewicht des Mittels mehr als 2,5 Gew.-%, vorzugsweise mehr als 4 Gew.-% und insbesondere mehr als 5 Gew.-% ausmacht.

7. Mittel nach einem der vorhergehenden Ansprüche, **dadurch gekennzeichnet, daß** der Anteil der Komponente (b) am Gesamtgewicht des Mittels weniger als 70 Gew.-%, vorzugsweise weniger als 50 Gew.-% und insbesondere weniger als 40 Gew.-% ausmacht.

8. Mittel nach einem der vorhergehenden Ansprüche, **dadurch gekennzeichnet, daß** der Wirkstoff aus der Klasse der Triazole ausgewählt ist unter (a11) Metconazol, (a12) Epoxiconazol, (a13) Tebuconazol, (a14) Triadimenol, (a15) Triadimefon, (a16) Cyproconazol (a17) Uniconazole, (a18) Paclobutrazol und (a19) Ipconazol.

9. Mittel nach einem der vorhergehenden Ansprüche, **dadurch gekennzeichnet, daß** der Anteil der Komponente (a1) am Gesamtgewicht des Mittels mehr als 2 Gew.-% und insbesondere mehr als 2,5 Gew.-% ausmacht.

10. Mittel nach einem der vorhergehenden Ansprüche, **dadurch gekennzeichnet, daß** der Anteil der Komponente (a1) am Gesamtgewicht des Mittels weniger als 50 Gew.-%, vorzugsweise weniger als 40 Gew.-% und insbesondere weniger als 35 Gew.-% ausmacht.

11. Mittel nach einem der vorhergehenden Ansprüche, umfassend
(a2) wenigstens einen wirkstoff der Formel (III) 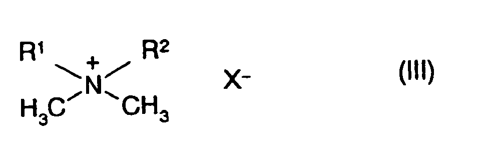 wobei R¹, R² und X die folgenden Bedeutungen haben:
R¹ C₁-C₄-Alkyl;
R² C₁-C₄-Alkyl, Cyclopentenyl, Halogen-C₁-C₆-Alkyl; oder worin R¹ und R² zusammen einen Rest -(CH₂)₅-, -(CH₂)₂-O-(CH₂)₂- oder -(CH₂)-CH=CH-(CH₂)-NH- darstellen;
X eine anionische Gruppe.

12. Mittel nach Anspruch 11, **dadurch gekennzeichnet, daß** der Wirkstoff der Formel (III) ausgewählt ist unter
(a21) N,N,N-Trimethyl-N-β-chlorethyl-ammoniumsalzen der Formel (IIIa), 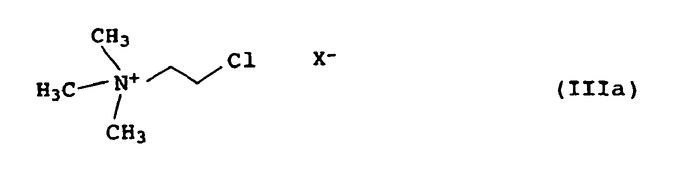
(a22) N,N-Dimethylpiperidiniumsalzen der Formel (IIIb) 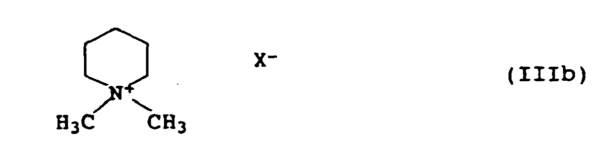 und
(a23) N,N-Dimethylmorpholiniumsalzen der Formel (IIIc) 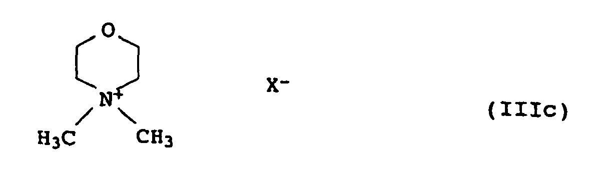
worin X- für Cl- oder 1/m · [MₓB_{y}O_{z}(A)ᵥ]^{m-} · w (H₂O) steht, wobei
M für ein Kation eines landwirtschaftlich nutzbaren Metalls, Wasserstoff oder Ammonium steht;
B Bor ist;
O Sauerstoff ist;
A eine chelat- oder komplexbildende Gruppe ist, die mit wenigstens einem Boratom oder einem landwirtschaftlich nutzbaren Kation assoziiert ist;
x einer Zahl von 0 bis 10 entspricht;
y einer Zahl von 1 bis 48 entspricht;
v einer Zahl von 0 bis 24 entspricht;
z einer Zahl von 0 bis 48 entspricht;
m einer ganzen Zahl von 1 bis 6 entspricht;
w einer Zahl von 0 bis 24 entspricht.

13. Mittel nach einem der vorhergehenden Ansprüche, **dadurch gekennzeichnet, daß** es flüssig und homogen ist.

14. Mittel nach einem der vorhergehenden Ansprüche, umfassend
(c) wenigstens ein oberflächenaktives Hilfsmittel.

15. Mittel nach Anspruch 14, **dadurch gekennzeichnet, daß** der Anteil der Komponente (c) am Gesamtgewicht des Mittels mehr als 10 Gew.-%, vorzugsweise mehr als 15 Gew.-% und insbesondere mehr als 20 Gew.-% ausmacht.

16. Mittel nach Anspruch 14, **dadurch gekennzeichnet, daß** der Anteil der Komponente (c) am Gesamtgewicht des Mittels weniger als 60 Gew.-%, vorzugsweise weniger als 50 Gew.-% und insbesondere weniger als 45 Gew.-% ausmacht.

17. Mittel nach Anspruch 14, **dadurch gekennzeichnet, daß** das oberflächenaktive Hilfsmittel ausgewählt ist unter (c1) Alkylglykosiden, (c2) Alkylsulfonaten, Alkylsulfaten, Alkylarylsulfonaten und Alkylarylsulfaten, sowie (c3) quaternierten Ammoniumsalzen.

18. Mittel nach Anspruch 17, **dadurch gekennzeichnet, daß** der Anteil der Komponente (c1) am Gesamtgewicht des Mittels mehr als 2 Gew.-%, vorzugsweise mehr als 10 Gew.-% und insbesondere mehr als 15 Gew.-% ausmacht.

19. Mittel nach Anspruch 17, **dadurch gekennzeichnet, daß** der Anteil der Komponente (c1) am Gesamtgewicht des Mittels weniger als 50 Gew.-%, vorzugsweise weniger als 40 Gew.-% und insbesondere weniger als 35 Gew.-% ausmacht.

20. Mittel nach einem der vorhergehenden Ansprüche, **dadurch gekennzeichnet, daß** der Anteil der Komponente (d) am Gesamtgewicht des Mittels mehr als 20 Gew.-% und insbesondere mehr als 25 Gew.-% ausmacht.

21. Mittel nach einem der vorhergehenden Ansprüche, **dadurch gekennzeichnet, daß** der Anteil der Komponente (d) am Gesamtgewicht des Mittels weniger als 60 Gew.-%, vorzugsweise weniger als 50 Gew.-% und insbesondere weniger als 45 Gew.-% ausmacht.

22. Verwendung eines Mittels nach einem der Ansprüche 1 bis 21, als Bioregulator im Pflanzenanbau.

23. Verwendung nach Anspruch 22, im Rapsbau.

24. Verwendung nach Anspruch 22 oder 23, zur Verbesserung des Wurzelwachstums.

25. Verwendung nach Anspruch 24, wobei sich die Verbesserung des Wurzelwachstums in einer erhöhten Anzahl an Wurzelsträngen, in längeren Wurzeln und/oder einer erhöhten Wurzeloberfläche äussert.

26. Verwendung nach einem der Ansprüche 22 bis 25 im Tankmix-Verfahren.

## Claims

1. A composition comprising
(a1) at least one active ingredient selected from among the triazole class or an agriculturally utilizable salt thereof,
(b) at least one straight-chain or branched saturated or unsaturated aliphatic carboxylic acid,
(d) water,
the molar ratio of component (b) to component (a1) being greater than 1, the component (a1) amounting to more than 1% by weight and the component (d) amounting to more than 10% by weight of the total weight of the composition.

2. The composition according to claim 1, wherein the molar ratio of component (b) to component (a1) is greater than 4.

3. The composition according to claim 1 or 2, wherein the carboxylic acid is selected among carboxylic acids of the formula (I)
R³[-CR⁴(R⁵)]ₙ-COOH (I)
where R³, R⁴, R⁵ and n have the following meanings:
R³ is hydrogen, C₁-C₂₅-alkyl, or C₁-C₂₅-alkenyl;
R⁴ is hydrogen, C₁-C₂₅-alkyl, or C₁-C₂₅-alkenyl;
R⁵ is hydrogen, hydroxyl, C₁-C₆-alkoxy or halogen; and
n is 0, 1, 2 or 3, or
R⁴ and R⁵ together with the carbon to which they are bonded form a carbonyl group.

4. The composition according to claim 3, wherein
R³ denotes hydrogen or C₁-C₅- alkyl,
R⁴ denotes hydrogen,
R⁵ denotes hydrogen or hydroxyl, and
n is 1.

5. The composition according to claim 1, wherein the carboxylic acid is selected among propionic acid, lactic acid, oleic acid, acetic acid and glyoxylic acid.

6. The composition according to one of the preceding claims, wherein component (b) amounts to more than 2.5% by weight, preferably more than 4% by weight, in particular more than 5% by weight, of the total weight of the composition.

7. The composition according to one of the preceding claims, wherein component (b) amounts to less than 70% by weight, preferably less than 50% by weight, in particular less than 40% by weight, of the total weight of the composition.

8. The composition according to any of the preceding claims, wherein the active ingredient of the triazole class is selected among (a11) metconazole, (a12) epoxiconazole, (a13) tebuconazole, (a14) triadimenole, (a15) triadimefone, (a16) cyproconazole, (a17) uniconazole, (a18) paclobutrazole and (a19) ipconazole.

9. The composition according to one of the preceding claims, wherein component (a1) amounts to more than 2% by weight, in particular more than 2.5% by weight, of the total weight of the composition.

10. The composition according to one of the preceding claims, wherein component (a1) amounts to less than 50% by weight, preferably less than 40% by weight, in particular less than 35% by weight, of the total weight of the composition.

11. The composition according to any of the preceding claims, comprising
(a2) at least one active ingredient of the formula (III) 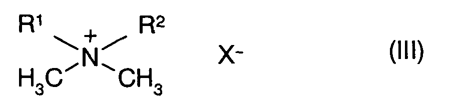 where R¹, R² and X have the following meanings:
R¹ is C₁-C₄-alkyl;
R² is C₁-C₄-alkyl, cyclopentenyl, halogen-C₁-C₆-alkyl, or where R¹ and R² together denote a radical -(CH₂)₅-, -(CH₂)₂-O-(CH₂)₂- or -(CH₂)-CH=CH-(CH₂)-NH-,
X is an anionic group.

12. The composition according to claim 11, wherein the active ingredient of the formula (III) is selected among
(a21) N,N,N-trimethyl-N-β-chloroethyl-ammonium salts of the formula (IIIa) 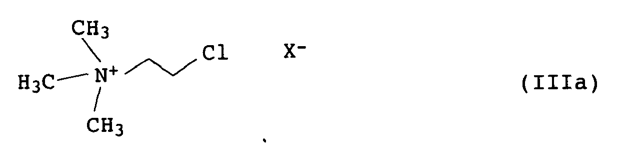
(a22) N,N-dimethylpiperidinium salts of the formula (IIIb) 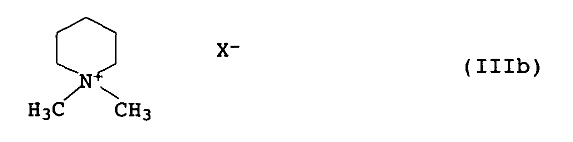 and
(a23) N,N-dimethylmorpholinium salts of the formula (IIIc) 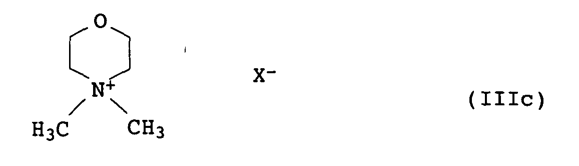
where X- is Cl- or 1/m · [MₓByO_{z}(A)ᵥ]m⁻ · w (H₂O) where
M is a cation of an agriculturally utilizable metal, hydrogen or ammonium,
B is boron,
O is oxygen,
A is a chelating or complexing group which is associated with at least one boron atom or one agriculturally utilizable cation,
x corresponds to a number 0 to 10,
y corresponds to a number 1 to 48,
v corresponds to a number 0 to 24,
z corresponds to a number 0 to 48,
m corresponds to an integer from 1 to 6, and
w corresponds to a number 0 to 24.

13. The composition according to any of the preceding claims, which is liquid and homogeneous.

14. The composition according to any of the preceding claims, comprising
(c) at least one surface-active adjuvant.

15. The composition according to claim 14, wherein component (c) amounts to more than 10% by weight, preferably more than 15% by weight, in particular more than 20% by weight, of the total weight of the composition.

16. The composition according to claim 14, wherein component (c) amounts to less than 60% by weight, preferably less than 50% by weight, in particular less than 45% by weight, of the total weight of the composition.

17. The composition according to claim 14, wherein the surface-active adjuvant is selected among (c1) alkylglycosides, (c2) alkylsulfonates, alkyl sulfates, alkylarylsulfonates and alkylaryl sulfates, and (c3) quaternized ammonium salts.

18. The composition according to claim 17, wherein component (c1) amounts to more than 2% by weight, preferably more than 10% by weight, in particular more than 15% by weight, of the total weight of the composition.

19. The composition according to claim 17, wherein component (c1) amounts to less than 50% by weight, preferably less than 40% by weight, in particular less than 35% by weight, of the total weight of the composition.

20. The composition according to one of the preceding claims, wherein component (d) amounts to more than 20% by weight, in particular more than 25% by weight, of the total weight of the composition.

21. The composition according to one of the preceding claims, wherein component (d) amounts to less than 60% by weight, preferably less than 50% by weight, in particular less than 45% by weight, of the total weight of the composition.

22. The use of the composition according to any of claims 1 to 21 as bioregulator in plant cultivation.

23. The use according to claim 22 in oilseed rape cultivation.

24. The use according to claim 22 or 23 for improving root growth.

25. The use according to claim 24, wherein improved root growth manifests itself in an increased number of individual roots, in longer roots and/or in an increased root surface area.

26. The use according to any of claims 22 to 25 in the tank mix method.

## Revendications

1. Produit comportant
(a1) au moins une substance active de la classe des triazoles ou un sel utilisable en agriculture de ceux-ci,
(b) au moins un acide carboxylique aliphatique linéaire ou ramifié, saturé ou insaturé,
(d) de l'eau,
dans lequel le rapport molaire entre le composant (b) et le composant (a1) est supérieur à 1, la fraction du composant (a1), par rapport au poids total du produit, représentant plus de 1 % en poids et celle du composant (d) plus de 10 % en poids.

2. Produit suivant la revendication 1, **caractérisé en ce que** le rapport molaire entre le composant (b) et le composant (a1) est supérieur à 4.

3. Produit suivant la revendication 1 ou 2, **caractérisé en ce que** l'acide carboxylique est choisi parmi des acides carboxyliques de la formule (I) :
R³[-CR⁴(R⁵)]ₙ-COOH (I)
dans laquelle R³, R⁴, R⁵ et n ont les significations suivantes :
R³ représente de l'hydrogène ou un groupe alkyle en C₁-C₂₅ ou alcényle en C₁-C₂₅,
R⁴ représente de l'hydrogène ou un groupe alkyle en C₁-C₂₅ ou alcényle en C₁-C₂₅,
R⁵ représente de l'hydrogène, de l'halogène ou un groupe hydroxy ou alcoxy en C₁-C₆, et
n vaut 0, 1, 2 ou 3, ou
R⁴ et R⁵ forment, conjointement avec le carbone sur lequel ils sont fixés, un groupe carbonyle.

4. Produit suivant la revendication 3, **caractérisé en ce que**
R³ représente de l'hydrogène ou un groupe alkyle en C₁-C₅,
R⁴ représente de l'hydrogène,
R⁵ représente de l'hydrogène ou un groupe hydroxy, et
n vaut 1.

5. Produit suivant la revendication 1, **caractérisé en ce que** l'acide carboxylique est choisi parmi de l'acide propionique, de l'acide lactique, de l'acide oléique, de l'acide acétique et de l'acide glyoxylique.

6. Produit suivant l'une des revendications précédentes, **caractérisé en ce que** la fraction du composant (b) sur le poids total du produit représente plus de 2,5 % en poids, de préférence plus de 4 % en poids, et en particulier plus de 5 % en poids.

7. Produit suivant l'une des revendications précédentes, **caractérisé en ce que** la fraction du composant (b) sur le poids total du produit représente moins de 70 % en poids, de préférence moins de 50 % en poids, et en particulier moins de 40 % en poids.

8. Produit suivant l'une des revendications précédentes, **caractérisé en ce que** la substance active de la classe des triazoles est choisie parmi (a11) du metconazole, (a12) de l'époxyconazole, (a13) du tébuconazole, (a14) du triadiménol, (a15) du triadiméfon, (a16) du cyproconazole, (a17) de l'uniconazole, (a18) du paclobutrazole et (a19) de l'ipconazole.

9. Produit suivant l'une des revendications précédentes, **caractérisé en ce que** la fraction du composant (a1) sur le poids total du produit représente plus de 2 % en poids, et en particulier plus de 2,5 % en poids.

10. Produit suivant l'une des revendications précédentes, **caractérisé en ce que** la fraction du composant (a1) sur le poids total du produit représente moins de 50 % en poids, de préférence moins de 40 % en poids, et en particulier moins de 35 % en poids.

11. Produit suivant l'une des revendications précédentes, comprenant
(a2) au moins une substance active de la formule (III) : 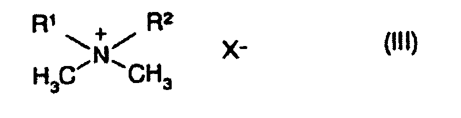 dans laquelle R¹, R² et X ont les significations suivantes :
R¹ représente un groupe alkyle en C₁-C₄,
R² représente un groupe alkyle en C₁-C₄, cyclopentényle, halogéno-C₁-C₆-alkyle, R¹ et R² représentant conjointement un radical -(CH₂)₅-, -(CH₂)₂-O-(CH₂)₂- ou -(CH₂)-CH=CH-(CH₂)-NH-,
X représente un groupe anionique.

12. Produit suivant la revendication 11, **caractérisé en ce que** la substance active de la formule (III) est choisie parmi :
(a21) des sels de N,N,N-triméthyl-N-β-chloroéthylammonium de la formule (IIIa) : 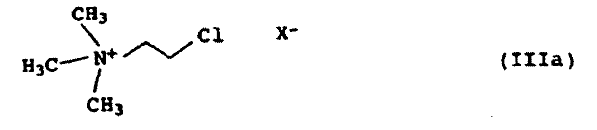
(a22) des sels de N,N-diméthylpipéridinium de la formule (IIIb) : 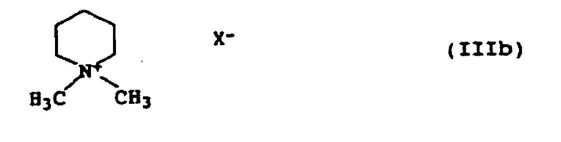 et
(a23) des sels de N,N-diméthylmorpholinium de la formule (IIIc) : 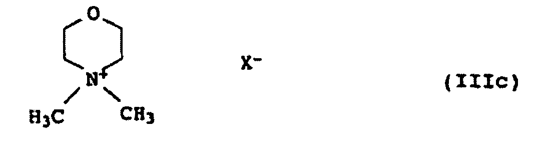 où X⁻ représente Cl⁻ ou 1/m · [MₓB_{y}O_{z}(A)ᵥ]^{m-} · w (H₂O), où
M représente un cation d'un métal utilisable en l'agriculture, de l'hydrogène ou de l'ammonium,
B est du bore,
O est de l'oxygène,
A est un groupe complexant ou de chélation, qui est associé à au moins un atome de bore ou à un cation utilisable en l'agriculture,
x est un nombre entier de 0 à 10,
y est un nombre entier de 1 à 48,
v est un nombre entier de 0 à 24,
z est un nombre entier de 0 à 48,
m est un nombre entier de 1 à 6,
w est un nombre entier de 0 à 24.

13. Produit suivant l'une des revendications précédentes, **caractérisé en ce qu'**il est liquide et homogène.

14. Produit suivant l'une des revendications précédentes, comprenant
(c) au moins un adjuvant tensioactif.

15. Produit suivant la revendication 14, **caractérisé en ce que** la fraction du composant (c) sur le poids total du produit représente plus de 10 % en poids, de préférence plus de 15 % en poids, et en particulier plus de 20 % en poids.

16. Produit suivant la revendication 14, **caractérisé en ce que** la fraction du composant (c) sur le poids total du produit représente moins de 60 % en poids, de préférence moins de 50 % en poids et en particulier moins de 45 % en poids.

17. Produit suivant la revendication 14, **caractérisé en ce que** l'adjuvant tensioactif est choisi parmi (c1) des alkylglycosides, (c2) des alkylsulfonates, des alkylsulfates, des alkylarylsulfonates et des alkylarylsulfates, ainsi que (c3) des sels d'ammonium quaternisés.

18. Produit suivant la revendication 17, **caractérisé en ce que** la fraction du composant (c1) sur le poids total du produit représente plus de 2 % en poids, de préférence plus de 10 % en poids, et en particulier plus de 15 % en poids.

19. Produit suivant la revendication 17, **caractérisé en ce que** la fraction du composant (c1) sur le poids total du produit représente moins de 50 % en poids, de préférence moins de 40 % en poids, et en particulier moins de 35 % en poids.

20. Produit suivant l'une des revendications précédentes, **caractérisé en ce que** la fraction du composant (d) sur le poids total du produit représente plus de 20 % en poids et en particulier plus de 25 % en poids.

21. Produit suivant l'une des revendications précédentes, **caractérisé en ce que** la fraction du composant (d) sur le poids total du produit représente moins de 60 % en poids, de préférence moins de 50 % en poids, et en particulier moins de 45 % en poids.

22. Utilisation d'un produit suivant l'une des revendications 1 à 21, comme biorégulateur dans la culture des plantes.

23. Utilisation suivant la revendication 22, dans la culture de colza.

24. Utilisation suivant la revendication 22 ou 23, pour l'amélioration de la croissance des racines.

25. Utilisation suivant la revendication 24, dans laquelle l'amélioration de la croissance des racines s'exprime en un nombre augmenté de radicules, en racines plus longues et/ou en une surface radiculaire augmentée.

26. Utilisation suivant l'une des revendications 22 à 25, dans le procédé de mélange en citerne.
